# EUROPÄISCHE PATENTSCHRIFT

(11) **EP 1 966 339 B1**
(45) Veröffentlichungstag und Bekanntmachung des Hinweises auf die Patenterteilung: **23.09.2009**
(21) Anmeldenummer: 06830219.9
(22) Anmeldetag: 30.11.2006
(51) Int. Cl.: C09J 7/02

(54) **WICKELBAND AUS EINER TPU-FOLIE**
ROLLED STRIP MADE FROM A TPU FILM
BANDE DE MATIERE A ENROULER, FAITE D'UN FILM DE POLYURETHANE THERMOPLASTIQUE

(30) Priorität: 14.12.2005 DE 102005060156
(43) Veröffentlichungstag der Anmeldung: 10.09.2008
(73) Patentinhaber: TESA SE, 20253 Hamburg (DE)
(72) Erfinder: MÜSSIG, Bernhard, 21218 Seevetal (DE)
(86) Internationale Anmeldenummer: PCT/EP2006/069115
(87) Internationale Veröffentlichungsnummer: WO 2007/068599

(56) Entgegenhaltungen:
- EP-A2- 0 894 841
- EP-A2- 1 469 024

## Beschreibung

Die vorliegende Erfindung betrifft ein halogenfreies flammwidriges vorzugsweise farbiges Wickelband, das weiter vorzugsweise eine insbesondere lösungsmittelfreie haftklebrige Beschichtung aufweist und das zum Beispiel zum Umwickeln von Lüftungsleitungen in Klimaanlagen, Drähten oder Kabeln eingesetzt wird und das insbesondere für Kabelbäume in Fahrzeugen oder Feldspulen für Bildröhren geeignet ist. Das Wickelband dient dabei zum Bündeln, Isolieren, Markieren oder Schützen.

Kabelwickelbänder und Isolierbänder bestehen üblicherweise aus weichgemachter PVC-Folie mit einer einseitigen Haftkleberbeschichtung. Es besteht verstärkt der Wunsch, die Nachteile dieser Produkte wie die Ausdampfung von Weichmachern und der hohe Halogengehalt zu beseitigen.

Die Weichmacher konventioneller Isolierbänder und Kabelwickelbänder dampfen allmählich aus, was zu einer Gesundheitsbelastung führt, insbesondere ist das üblicherweise verwendete DOP bedenklich. Weiterhin schlagen sich die Dämpfe in Kraftfahrzeugen an den Scheiben nieder, was die Sicht (und damit erheblich die Fahrsicherheit) verschlechtert und vom Fachmann als Fogging (DIN 75201) bezeichnet wird. Bei noch stärkerer Verdampfung durch höhere Temperaturen, zum Beispiel im Motorinnenraum von Fahrzeugen oder bei Isolierbändern in elektrischen Geräten, versprödet das Wickelband durch den entstehenden Weichmacherverlust und die Zersetzung des PVC-Polymers.

Vor dem Hintergrund der Diskussion um Verbrennung von Kunststoffabfällen, zum Beispiel Shredderabfall aus dem Fahrzeugrecycling, besteht der Trend zur Reduktion des Halogengehaltes und damit der Dioxinentstehung. Daher werden die Wandstärken bei den Kabelisolierungen und die Dicken der zum Umwickeln verwendeten Bänder der PVC-Folie reduziert. Die übliche Dicke der PVC-Folien für Wickelbänder beträgt 85 bis 150 µm. Unterhalb von 85 µm treten erhebliche Probleme im Kalanderprozess auf, so dass solche Produkte mit vermindertem PVC-Gehalt kaum verfügbar sind.

Die üblichen Wickelbänder enthalten Stabilisatoren auf Basis giftiger Schwermetalle wie Blei, Cadmium oder Barium.

Stand der Entwicklung zum Bandagieren von Leitungssätzen sind Wickelbänder mit und ohne Klebstoffbeschichtung, die aus einem PVC-Trägermaterial bestehen, das durch Einarbeitung von erheblichen Mengen (30 bis 40 Gew.-%) an Weichmacher flexibel eingestellt ist. Das Trägermaterial ist zumeist einseitig mit einer Selbstklebemasse auf Basis von SBR-Kautschuk beschichtet. In JP 10 001 583 A1, JP 05 250 947 A1, JP 2000 198 895 A1 und JP 2000 200 515 A1 werden typische Weich-PVC-Klebebänder beschrieben. Um eine höhere Flammfestigkeit der Weich-PVC-Materialien zu erreichen, wird üblicherweise, wie zum Beispiel in JP 10 001 583 A1 beschrieben, die stark toxische Verbindung Antimonoxid verwendet.

Es gibt Bemühungen, statt Weich-PVC-Folie Gewebe oder Vliese zu verwenden. Die daraus resultierenden Produkte werden aber in der Praxis nur wenig eingesetzt, da sie relativ teuer sind und sich in der Handhabung (zum Beispiel Handeinreißbarkeit, elastisches Rückstellvermögen) und unter Nutzungsbedingungen (zum Beispiel Beständigkeit gegen Nässe oder Betriebsflüssigkeiten) stark von den gewohnten Produkten unterscheiden, wobei - wie im Folgenden ausgeführt - der Dicke eine besondere Bedeutung zukommt. Derartig dicke Vliese machen die Kabelbäume noch dicker und unflexibler als klassische PVC-Tapes, auch wenn dies sich positiv auf die Schalldämmung auswirkt, was aber nur in einigen Bereichen von Kabelbäumen von Vorteil ist. Vliese sind aber wenig dehnbar und weisen praktisch kein Rückstellvermögen auf. Dies ist von Bedeutung, da dünne Äste von Kabelbäumen so stramm gewickelt sein müssen, dass sie beim Einbau nicht schlaff herunterhängen und sich leicht vor dem Anclipsen und dem Anbau der Stecker positionieren lassen. Ein weiterer Nachteil von Textilklebebändern ist die geringe Durchschlagspannung von ca. 1 kV, weil nur die Klebstoffschicht isoliert.

Folienbänder hingegen liegen bei über 5 kV, sie sind gut spannungsbeständig. Textile Wickelbänder sind entweder nicht flammfest oder enthalten Halogenverbindungen (in der Regel Bromverbindungen) als Flammschutzmittel. Beispiele sind aus der DE 200 22 272 U1, der EP 1 123 958 A1, der WO 99/61541 A1 und der US 4,992,331 A1 zu entnehmen.

Wickelbänder und Kabelisolierungen aus thermoplastischem Polyester werden versuchsweise zur Herstellung von Kabelbäumen verwendet. Diese weisen erhebliche Mängel bezüglich ihrer Flammbeständigkeit, Flexibilität, Verarbeitbarkeit, Alterungsbeständigkeit oder Kompatibilität zu den Kabelmaterialen auf. Der schwerwiegendste Nachteil von Polyester ist jedoch die erhebliche Hydrolyseempfindlichkeit, so dass ein Einsatz aus Sicherheitsgründen in Automobilen nicht mehr in Frage kommt. Wickelbänder auf Polyesterbasis sind entweder nicht flammfest oder enthalten Halogenverbindungen als Flammschutzmittel. Beispiele sind in der DE 100 02 180 A1, der JP 10 149 725 A1, der JP 09 208 906 A1, der JP 05 017 727 A1 und der JP 07 150 126 A1 zu finden.

In der Literatur werden auch Wickelbänder aus Polyolefinen beschrieben. Diese sind jedoch leicht entflammbar oder enthalten halogenhaltige Flammschutzmittel. Darüber hinaus weisen die aus Ethylencopolymeren hergestellten Materialien einen zu geringen Erweichungspunkt auf (sie schmelzen in der Regel schon bei dem Versuch, eine Wärmealterungsbeständigkeit zu prüfen), und im Fall der Verwendung von üblichen Polypropylenpolymeren ist das Material meistens zu unflexibel. Metallhydroxide werden zum Teil zwar verwendet, die Einsatzmengen von 40 bis 100 phr sind aber für ausreichenden Flammschutz zu gering, das heißt, sie sind nicht nur nicht selbstverlöschend, sondern weisen sogar eine relativ hohe Brandgeschwindigkeit (zum Beispiel über 100 mm/min nach MVSS 302) auf. Folien mit über 100 phr an Flammschutzmittel sind technisch kaum noch herstellbar. Hinzu kommt dass solche Folien ein geringe Reißfestigkeit aufweisen und sehr steif sind, das heißt, die wesentliche Verarbeitungseigenschaften eines typischen PVC-Wickelbandes wird verfehlt.

In der WO 00/71634 A1 wird ein Wickelklebeband beschrieben, dessen Folie aus einem Ethylen-Copolymer als Basismaterial besteht. Die Trägerfolie enthält das halogenhaltige Flammschutzmittel Decabromdiphenyloxid. Die Folie erweicht unterhalb einer Temperatur von 95 °C, die normale Nutzungstemperatur liegt aber oft oberhalb von 100 °C oder kurzzeitig sogar über 130 °C, was bei der Verwendung im Motorinnenraum keine Seltenheit ist.

In der WO 97/05206 A1 wird ein halogenfreies Wickelklebeband beschrieben, dessen Trägerfolie aus einem Polymerblend aus Polyethylen niederer Dichte und einem Ethylen/Vinylacetat- oder Ethylen/Acrylat-Copolymer besteht. Als Flammschutzmittel werden 40 bis 90 phr Aluminiumhydroxid oder Ammoniumpolyphosphat verwendet. Ein erheblicher Nachteil der Trägerfolie ist wiederum die geringe Erweichungstemperatur. Um dem entgegen zu wirken, wird die Verwendung von Silan-Vernetzung beschrieben. Diese Vernetzungsmethode führt aber nur zu sehr ungleichmäßig vernetztem Material, so dass sich in der Praxis kein stabiler Produktionsprozess beziehungsweise gleichmäßige Qualität des Produktes realisieren lässt.

Analoge Probleme der mangelnden Wärmeformbeständigkeit treten bei den in WO 99/35202 A1 und US 5,498,476 A1 beschriebenen Elektroklebebändern auf. Als Trägerfolienmaterial wird ein Blend aus EPDM und EVA in Kombination mit Ethylendiaminphosphat als Flammschutzmittel beschrieben. Dieses weist wie auch Ammoniumpolyphosphat eine hohe Hydrolyseempfindlichkeit auf. In Kombination mit EVA tritt zudem eine Versprödung bei Alterung auf. Die Anwendung auf üblichen Kabeln aus Polyolefin und Aluminium- oder Magnesiumhydroxid führt zu schlechter Verträglichkeit. Darüber hinaus ist das Brandverhalten solcher Kabelbäume schlecht, da diese Metallhydroxide mit Phosphorverbindungen wie unten ausgeführt antagonistisch wirken. Die beschriebenen Isolierbänder sind für Kabelbaumwickelbänder zu dick und zu steif.

Versuche, das Dilemma aus zu niedriger Erweichungstemperatur, Flexibilität, Flammwidrigkeit und Halogenfreiheit zu lösen, beschreiben nachfolgende Schriften.

Die EP 0 953 599 A1 beansprucht eine Polymermischung aus LLDPE und EVA für Anwendungen als Kabelisolierungen und als Folienmaterial. Als Flammschutzmittel wird eine Kombination aus Magnesiumhydroxid mit spezieller Oberfläche und rotem Phosphor beschrieben, die Erweichung bei relativ niedriger Temperatur wird jedoch in Kauf genommen. Die Menge an Magnesiumhydroxid liegt bei 63 phr. Wegen der trotz hohen Füllstoffgehaltes nicht befriedigenden Brandeigenschaften wird roter Phosphor verwendet.

Eine sehr ähnliche Kombination wird in EP 1 097 976 A1 beschrieben. Hier wird allerdings zur Verbesserung der Wärmeformbeständigkeit anstatt des LLDPEs ein PP-Polymer verwendet, welches eine höhere Erweichungstemperatur hat. Nachteil ist jedoch die daraus resultierende geringe Flexibilität. Für die Abmischung mit EVA oder EEA wird behauptet, dass die Folie eine hinreichende Flexibilität aufweist. Dem Fachmann ist jedoch aus der Literatur bekannt, dass diese Polymere zur Verbesserung des Flammschutzes mit Polypropylen abgemischt werden. Die beschriebenen Produkte weisen eine Foliendicke von 0,2 mm auf, allein diese Dicke schließt bei gefüllten Polyolefinfolien eine Flexibilität aus, da diese in der 3. Potenz von der Dicke abhängt. Das beschriebene Verfahren der Extrusion ist bei den extrem niedrigen Schmelzindices der verwendeten Polyolefine, wie dem Fachmann bekannt, auf einer Produktionsanlage kaum durchführbar, erst recht nicht für eine praxisgerechte dünne Folie. Der extrem niedrige Schmelzindex begrenzt den Einsatz auf 50 bis 100 phr Magnesiumhydroxid.

Beide Lösungsansätze bauen auf die bekannte synergistische Flammschutzwirkung des roten Phosphors mit Magnesiumhydroxid. Die Verwendung von elementarem Phosphor birgt jedoch erhebliche Nachteile und Gefahren. Bei der Verarbeitung wird übel riechendes, selbstentzündliches und hochgiftiges Phosphin freigesetzt. Auch das fertige Wickelband riecht in heißer und feuchter Anwendungsumgebung knoblauchartig. Ein weiterer Nachteil ergibt sich aus der Entstehung von sehr dichtem, weißem Rauch im Brandfall. Darüber hinaus sind nur braune bis schwarze Produkte herstellbar, Wickelbänder werden zwecks Farbkennzeichnung jedoch in einem breiten Farbsortiment verwendet.

Die JP 2001 049 208 A1 beschreibt eine öl- und wärmebeständige Folie für ein Klebeband, bei welcher beide Schichten aus einer Mischung von EVA oder EEA, Peroxidvernetzer, Silanvernetzer, Katalysator für die Silanolkondensation und Flammschutzmittel (100 phr Magnesiumhydroxid). Diese Folie löst weder das Problem der schlechten Flexibilität einer gefüllten Polypropylenfolie, noch das der hohen Anforderungen an die Alterungsbeständigkeit.

Die WO 03/070848 A1 beschreibt eine Folie aus reaktiven Polypropylen und 40 phr Magnesiumhydroxid. Diese Zusatzmenge reicht zu einer wesentlichen Verbesserung des Brandverhaltens nicht aus.

Die genannten Schriften zum Stand der Technik führen wegen der genannten Nachteile, insbesondere mangelnder Flammwidrigkeit, Flexibilität, Reißfestigkeit und/oder Wärmebeständigkeit, keine Folien auf, die auch noch die weiteren Anforderungen wie Handeinreißbarkeit, Kompatibilität mit Polyolefinkabelisolierung oder hinreichender Abrollkraft lösen. Darüber hinaus bleiben die Verarbeitbarkeit in Folienherstellprozessen, hoher Fogging-Wert und die Durchschlagsspannungsfestigkeit fraglich. Das Hauptproblem der bekannt gewordenen Erfindungen auf Basis flammfester Trägerfolien aus Polyolefin und Metallhydroxid ist die Unvereinbarkeit der mechanischen Anforderungen mit denen der Flammfestigkeit. Mit weniger als 60 Gew.-% Flammschutzmittel (Metallhydroxid und gegebenenfalls weiterer Flammschutzadditive) kann keine Selbstverlöschung erreicht werden und schon ab 40 Gew.-% Flammschutzmittel sind Flexibilität und Reißfestigkeit auf kaum akzeptabel niedrigem Niveau. Die Kombination Polyolefin und Metallhydroxid führt aufgrund des Wirkungsmechanismus (Kühlung durch endotherme Zersetzung des Metallhydroxids und Erzeugung von Wasserdampf) zwar zu einer Verlangsamung des Verbrennungsprozesses aber nicht zu einer Selbstverlöschung. Dieses System weist auch noch den Nachteil auf, dass es bei der Dehnung im Wickelprozess, teilweise auch schon beim Abrollen des Klebebandes, zu Weißbruch kommt. Diese Bänder sind in der Regel schwarz und der fertige Wickel weist dann eine schwarz-grau gescheckte Oberfläche auf. Bei hohem Füllstoffanteil kann die Zugfestigkeit so gering werden, dass das Band bei Abrollen reißt.

Klebebänder aus Polyurethan (PU) sind bekannt, zum Teil auch mit flammwidriger Ausrüstung. Es handelt sich zumeist um haftklebrig ausgerüstete PU-Schäume sowie um nachfolgend erläuterte Klebebänder auf Folienbasis.

JP 2001 020 178 A1 beschreibt ein doppelseitiges Klebeband für elektromagnetische Abschirmung aus einem Polyestergewebe und einer halogenhaltigen PU-Schicht.

Die JP 2001 288 430 A1 beschreibt ein flammwidriges Klebeband, dessen Träger aus einem Polyurethanharzlösung und Dicyandiamid hergestellt wurde. Die Verwendung einer aus Lösung gegossenen Folie ist nicht nur teuer, sondern entspricht auch nicht den ökologischen Zielen des erfindungsgemäßen Bandes aus einer Folie, welche lösungsmittelfrei durch thermoplastische Verarbeitung hergestellt werden soll. Versuche, Dicyandiamid in thermoplastisches Polyurethan (TPU) einzuarbeiten, sind wegen Zersetzung des TPU während der Compoundierung gescheitert.

Die JP 2003 013 026 A1 und die JP 2004 115 608 A1 beschreiben (Abdeck)klebebänder für den Umgang mit radioaktiven Substanzen, dessen Träger ebenfalls aus Lösung hergestellt wird. Er besteht aus einer Polyurethanharzlösung und Hydrazodicarbonamid. Hydrazodicarbonamid wirkt bei thermoplastischer Verarbeitung durch Zersetzung als Schäumungsmittel und wäre für TPU mit hochschmelzendem Hartblöcken (das heißt hoher Verarbeitungstemperatur) ungeeignet.

Die JP 62 069 640 A1 beschreibt ein transparentes Klebeband zur Herstellung von Wafer Chips. Der PU-Träger, welcher optional ein Flammschutzmittel wie zum Beispiel 4,4'-Dichlorohexylmethandiisocyanat enthalten kann, wird aus Lösung hergestellt.

Die DE 203 06 801 U1 beschreibt ein Klebeband aus einer Polyurethanfolie. Klebebänder aus Polyurethanfolie sind allerdings schon seit vielen Jahren aus der Praxis bekannt. Als Rohstoffe werden Polyester- und Polyetherdiole, aromatische und aliphatische Isocyanate aufgeführt. Dies ist eine allgemeine Beschreibung der bekannten Rohstoffklassen, spezielle Rohstoffe werden nicht genannt. Es wird beschrieben, dass die Folie auch Additive enthalten kann, genannt werden UV- und Ozonstabilisatoren, Füllstoffe oder Flammschutzmittel. Antioxidantien oder Hydrolyseschutzmittel werden nicht erwähnt. Als Flammschutzmittel werden Ammoniumpolyphosphat, Antimontrioxid und Aluminiumtrihydrat (ATH) namentlich aufgeführt, aber nicht anhand von Beispielen konkretisiert. Versuche haben ergeben, dass Ammoniumpolyphosphat (APP) Polyurethane bei thermoplastischer Verarbeitung abbaut, was den Fachmann nicht überrascht, da APP hygroskopisch ist und daher einen hydrolytischen Abbau verursachen kann. Darüber hinaus wird aufgrund der Acidität des APPs die Hydrolyse zusätzlich noch katalysiert. APP bewirkt als stark ionogenes Salz auch schlechte elektrische Eigenschaften, wie es von der Verwendung in anderen Materialien zum Beispiel für Drahtisolierungscompounds bekannt ist. Das erfindungsgemäße Wickelband soll jedoch auch gut isolierende Eigenschaften aufweisen. Wie dem Fachmann weiterhin bekannt ist, wirkt Antimontrioxid nur in Kombination mit Halogenen und macht daher in TPU allein keinen Sinn. Dem Fachmann ist auch bekannt, dass ATH als Flammschutzmittel nur für PE und EVA in Frage kommt, da es eine niedrige Zersetzungstemperatur aufweist, aber nicht für Polypropylen und daher erst recht nicht für ein hochschmelzendes TPU mit noch höherer Verarbeitungstemperatur.

Die EP 1 108 768 A1 beschreibt ein ausschließlich farbloses Klebeband mit TPU-Träger für die Überklebung von Fugen in Flugzeugen, nicht für Wickelanwendungen, insbesondere von Drahtbündeln in Fahrzeugen. In der Praxis sind solche Wickelbänder schwarz, seltener bunt eingefärbt und praktisch nie farblos. Das Klebeband ist zusätzlich auf einen transparenten Haftkleber aus Polyurethan beschränkt, gefordert werden Wickelbänder mit einer hineichenden Abrollkraft beziehungsweise Klebkraft auf der Rückseite, um in leicht gedehntem Zustand auf den zu umwickelnden Gegenstand appliziert zu werden. Für diesen Zweck sind jedoch im Wesentlichen Klebmassen aus Polyacrylat, Natur- oder Synthesekautschuk geeignet. Der Haftkleber des beanspruchten Klebebandes ist lösungsmittelhaltig, wohingegen die Haftkleber umweltfreundlich und lösungsmittelfrei sein sollen wie zum Beispiel Dispersionen oder Schmelzhaftkleber. Das Klebeband muss eine Dicke von mindestens 9 mil aufweisen, das heißt die Folie eine Mindestdicke von 8 mil (0,2 mm), um die Boeing-Norm BSS 7230 F2 zu erfüllen. Das in der Schrift beanspruchte Klebeband enthält zudem bromhaltige Flammschutzmittel. Die beschriebene Anwendung bedarf keiner besonderen thermischen Beständigkeit, und die Schrift gibt auch keine Hinweise auf eine solche Anforderung. Die Schrift enthält daher keine Hinweise auf Stabilisatoren wie Antioxidantien oder Hydrolyseschutzmittel, als Additive sind lediglich transluzente Farbstoffe, Antiblockmittel und Gleitmittel (Lubricants) erwähnt. Für die Polyurethanfolie wird keine spezielle Zusammensetzung ausgeführt.

Die JP 2005 264 112 A beschreibt ein Klebeband mit einem Träger bestehend aus Copolyamid als Hauptkomponente und Nebenkomponenten. Letztere sind Polyurethan und Stickstoffverbindungen. Die Schrift lehrt, dass der Zusatz von Polyurethan die Flexibilität einer reinen Polyamidfolie verbessert, aber in größeren Mengen die Kratzfestigkeit stark herabsetzt, daher soll der Anteil an Polyamid bei 40 bis 90 Teilen liegen. Als Flammschutzmittel werden Hydrazodicarbonamid, Mono-, Di-, Tricyanoethylcyanurat, Melamincyanurat und Dicyandiamid erwähnt. Bevorzugt wird eine Kombination aus Hydrazodicarbonamid und Melamincyanurat. Letzteres hat sich als Flammschutzmittel für Polyamide bewährt (siehe zum Beispiel JP 11 349 809 A1), Hydrazodicarbonamid hingegen ist aus oben genannten Gründen für thermoplastische Verarbeitung eigentlich ungeeignet. Die Schrift beschreibt jedoch eine Verarbeitungstemperatur von nur 150 bis 160 °C, so dass eine Verarbeitung bei Compounds mit niedriger Erweichungstemperatur realistisch erscheint. Der Grund hierfür liegt in den niedrigen Schmelztemperaturen der gewählten Rohstoffe, für das Polyurethan werden 60 bis 120 °C und für das Polyamid 100 bis 180 °C erwähnt, in den Beispielen wird ein Polyamid mit 133 °C Erweichungspunkt verwandt. Die in der JP 2005 264 112 A beanspruchte Polyamidfolie weist auch den Nachteil auf, dass sie nicht thermostabilisiert werden kann. Für Polyamide werden Kupferstabilisatoren eingesetzt, welche bei Polyurethanen (insbesondere polyetherbasierten) oder Polyolefinen als Oxidationskatalysatoren wirken.
Die Folie weist eine Dicke von 0,2 mm auf. Das beschriebene Klebeband enthält keinen phosphorbasiertes Flammschutzmittel. Die Schrift erwähnt weder eine Anforderung an thermische Beständigkeit, noch eine Verwendung von Stabilisatoren wie Antioxidantien oder Hydrolyseschutzmittel. Für das Polyurethan in der Folie wird keine spezielle Zusammensetzung ausgeführt.
Die Folie für das erfindungsgemäße Wickelband wäre mit der in der Schrift genannten bevorzugten Kombination aus Hydrazodicarbonamid und Melamincyanurat wegen der Zersetzung bei hohen Temperaturen, die für die Verarbeitung von TPU mit dem hochschmelzenden Hartblöcken beziehungsweise großer Shore-Härte erforderlich ist, nicht herstellbar.

Weiterhin sind Klebebänder mit Trägern aus vernetztem nicht-thermoplastischem Polyurethan bekannt geworden. Die US 5,807,637 A beschreibt ein Klebeband mit einer Haftklebe- und einer Siegelschicht, die zugrunde liegende Folie enthält als Füllstoff Calciumcarbonat und ist daher nicht flammfest. Die US 6,129,983 A beschreibt ein analoges Produkt jedoch mit zwei haftklebrigen Schichten.

Die EP 1 101 807 A1 erwähnt ein Maskenklebeband mit einem Verbundträger aus vernetztem Polyurethan und Polyester. Die PU-Schicht kann mit Füllstoffen modifiziert sein, Flammschutzmittel sind nicht erwähnt.

Die genannten Klebebandträger werden durch In-Line-Dosierung und Mischung von Polyol, Isocyanat und Katalysator auf einen Hilfsträger hergestellt. Der Vorteil liegt in geringen Rohstoffkosten im Vergleich zu TPU, jedoch ist das Verfahren sehr schwierig in der Praxis zu realisieren. Da die Träger vernetzt sind, ist auch ein thermoplastisches Recycling nicht möglich. Der wesentliche Nachteil der in den Schriften genannten Erfindungsgegenstände ist jedoch die fehlende Eignung für Wickelbänder, da sie weder Flammfestigkeit noch eine hinreichende Zugfestigkeit, welche sich bei TPU aus der physikalische Vernetzung über die Hartblöcke ergibt, aufweisen.

Die EP 1 469 052 A1 und die EP 1 469 024 A1 beschreiben Klebebänder mit vernetzten Polyurethanen als Haftkleber auf beliebigen Trägern, jedoch nicht TPU-Folien.

Die US 5,858,495 A1 beschreibt ein sehr dickes nachleuchtendes Klebeband, dessen Träger durch Polymerisation einer Mischung eines Polyester- oder Polyurethanacrylats und einem nachleuchtenden Pigment hergestellt wird. Dieses Material ist von der chemischen Struktur her kein TPU, sondern ein sehr hartes urethangruppenhaltiges hartes Polymerisat.

Die Aufgabe der Erfindung ist das Auffinden einer Lösung für ein Wickelband, welches die Vorteile der Halogenfreiheit, Flammwidrigkeit, Wärmebeständigkeit, Abriebfestigkeit, und den mechanischen Eigenschaften wie Zugfestigkeit und Flexibilität von PVC-Wickelbändern mit der Halogenfreiheit von textilen nichtflammfesten Wickelbändern verbindet und darüber hinaus eine überlegene Wärmealterungsbeständigkeit aufweist, wobei eine großtechnische Produzierbarkeit der Folie sichergestellt sein soll und eine hohe Durchschlagsspannungsfestigkeit bei einigen Anwendungen notwendig ist. Durch das Fehlen von Schwermetallstabilisatoren und Phthalatweichmachem sollen die Wickelbänder arbeitshygienisch und ökologisch vorteilhaft sein. Der vollständige oder weitgehende Verzicht auf Weichmacher, insbesondere auf DOP, ist erwünscht, um hohe Fogging-Werte zu erreichen und die Folgen von Weichmacherwanderung in die Klebemasse wie Teleskopieren oder Kantenklebrigkeit zu vermeiden.
Aufgabe der Erfindung ist es weiterhin, derartige Wickelbänder zur Verfügung zu stellen, welche ein besonders sicheres und schnelles Umwickeln, insbesondere von Drähten und Kabeln zum Markieren, Schützen, Isolieren, Abdichten oder Bündeln ermöglichen, wobei die Nachteile des Standes der Technik nicht oder zumindest nicht in dem bisherigen Umfang auftreten.
Es besteht sodann die Aufgabe, thermoplastisch hergestellte Folien mit Additivkombinationen zu finden, welche die Wärmebeständigkeit von PVC nicht nur erreichen, sondern sogar übertreffen.

Gelöst wird diese Aufgabe durch ein Wickelband, wie es im Hauptanspruch niedergelegt ist. Gegenstand der Unteransprüche sind vorteilhafte Fortbildungen des Erfindungsgegenstandes sowie Verwendungen des erfindungsgemäßen Wickelbandes.

Demgemäß betrifft die Erfindung ein thermisch hochbelastbares flammwidriges halogenfreies Wickelband mit einer Folie aus einem TPU aufgebaut aus einem hydroxylgruppenhaltigen Polymerisationsprodukt des Tetrahydrofurans, 4,4'-Diphenylmethandiisocyanat und Butandiol-(1,4) und einem halogenfreien Flammschutzmittel.

Für den Fachmann überraschend und nicht vorhersehbar ist ein für das Wickelband geeigneter Träger wie folgt herstellbar.

Das Polyurethan wird aus
(A) 4,4'-Diphenylmethandiisocyanat und
(B) einem hydroxylgruppenhaltigen Polymerisationsprodukt des Tetrahydrofurans und
(C) Butandiol-(1,4) und
(E) mindestens einem halogenfreien, nicht reaktiven oder einbaubaren Flammschutzmittel
   vorzugsweise unter Verwendung von Stabilisatoren wie
(F) einem Antioxidant
   und/oder
(G) einem Hydrolyseschutzmittel
   gegebenenfalls unter Verwendung von
(D) einem Katalysators
   und/oder
(H) weiteren Hilfs- und Zusatzstoffen
vorzugsweise im Prepolymerverfahren hergestellt.

Die Kennzahl (gebildet aus dem mit 100 multiplizierten Quotienten der Äquivalenzverhältnisse der Isocyanatgruppen aus (A) und der Summe der zerewitinoffaktiven Wasserstoffatome der Verbindungen (B) und (C)) beträgt 85 bis 120 vorzugsweise 95 bis 110. Im Fall der Verwendung von einbaubaren phosphorhaltigen Flammschutzmitteln wird die Kennzahl aus dem mit 100 multiplizierten Quotienten der Äquivalenzverhältnisse der Isocyanatgruppen aus (A) und der Summe der zerewitinoffaktiven Wasserstoffatome der Verbindungen (B), (C) und (E) berechnet.

Neben (A) 4,4'-Diphenylmethandiisocyanat können weitere aliphatische, cycloaliphatische, araliphatische, aromatische und heterocyclische Diisocyanate oder beliebige Gemische dieser Diisocyanate verwendet werden (vergleiche HOUBEN-WEYL "Methoden der organischen Chemie", Band E 20 "Makromolekulare Stoffe", Georg Thieme Verlag, Stuttgart, New York 1987, Seiten 1587 bis 1593 oder Justus Liebigs Annalen der Chemie, 562, Seiten 75 bis 136).

Im Einzelnen seien beispielhaft genannt:
aliphatische Diisocyanate wie Ethylendiisocyanat, 1,4-Tetramethylendiisocyant, 1,6-Hexamethylendiisocyanat, 1,12-Dodecandiisocyanat; cycloaliphatische Diisocyanate wie Isophorondiisocyanat, 1,4-Cyclohexandiisocyanat, 1-Methyl-2,4-cyclohexandiisocyanat und 1-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische; außerdem aromatische Diisocyanate wie 2,4-Toluylendiisocyanat, Gemische aus 2,4-Toluylendiisocyanat und 2,6-Toluylendiisocyanat, 2,4'-Diphenylmethandiisocyanat und 2,2'-Diphenylmethandiisocyanat oder 2,4'-Diphenylmethandiisocyanate, 4,4'-Diisocyanatodiphenylethan-(1,2) und 1,5-Naphthylendiisocyanat.

Vorzugsweise wird 4,4'-Diphenylmethandiisocyanat als alleiniges Diisocyanat verwendet. Davon unbenommen können technisch unvermeidbare Verunreinigungen durch andere isomere Diphenylmethandiisocyanate vorhanden sein.

Die hydroxylgruppenhaltigen Polymerisationsprodukte des Tetrahydrofurans werden als Polyetherole (B) eingesetzt. Es können auch trifunktionelle Polyether in Anteilen von 0 bis 30 Gew.-% bezogen auf die bifunktionellen Polyether eingesetzt werden, jedoch höchstens in solcher Menge, dass ein noch thermoplastisch verarbeitbares Produkt entsteht. Die im Wesentlichen linearen Polyether-Diole besitzen vorzugsweise zahlenmittlere Molekulargewichte Mₙ von 450 bis 6000 Dalton und insbesondere von 600 bis 1500 Dalton. Sie können sowohl einzeln als auch in Form von Mischungen untereinander zur Anwendung kommen.

Neben den hydroxylgruppenhaltigen Polymerisationsprodukten des Tetrahydrofurans können weitere langkettige zerewitinoffaktive Polyole mitverwendet werden, die im Mittel mindestens 1,8 bis höchstens 3,0 zerewitinoffaktiven Wasserstoffatome und ein zahlenmittleres Molekulargewicht Mₙ von 450 bis 10000 Dalton aufweisen. Produktionsbedingt enthalten diese oft kleine Mengen an nichtlinearen Verbindungen. Häufig spricht man daher auch von "im Wesentlichen linearen Polyolen". Eingeschlossen sind neben Aminogruppen, Thiolgruppen oder Carboxylgruppen aufweisende Verbindungen insbesondere zwei bis drei, bevorzugt zwei Hydroxylgruppen aufweisende Verbindungen, speziell solche mit zahlenmittleren Molekulargewichten Mₙ von 450 bis 6000 Dalton, besonders bevorzugt solche mit einem zahlenmittleren Molekulargewicht Mₙ von 600 bis 4500 Dalton zum Beispiel Hydroxylgruppen aufweisende Polyester, Polyether, Polycarbonate und Polyesteramide.

Geeignete zusätzliche Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt.
Als Alkylenoxide seien zum Beispiel genannt:
Ethylenoxid, 1,2-Propylenoxid, Epichlorhydrin und 1,2-Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden.

Als Startermoleküle kommen beispielsweise in Betracht:
Wasser, Aminoalkohole, wie N-Alkyl-diethanolamine, beispielsweise N-Methyldiethanolamin und Diole wie Ethylenglykol, 1,3-Propylenglykol, 1,4-Butandiol und 1,6-Hexandiol. Gegebenenfalls können auch Mischungen von Startermolekülen eingesetzt werden.

Geeignete zusätzliche Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht aliphatische Dicarbonsäuren wie Bernsteinsäure, Glutarsäure, Adipinsäure, Korksäure, Azelainsäure und Sebacinsäure oder aromatische Dicarbonsäuren wie Phthalsäure, Isophthalsäure und Terephthalsäure. Die Dicarbonsäuren können einzeln oder als Gemische, zum Beispiel in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, zum Beispiel Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol oder Dipropylenglykol. Je nach den gewünschten Eigenschaften können die mehrwertigen Alkohole allein oder in Mischung untereinander verwendet werden. Geeignet sind ferner Ester der Kohlensäure mit den genannten Diolen, insbesondere solche mit 4 bis 6 Kohlenstoffatomen wie 1,4-Butandiol oder 1,6-Hexandiol, Kondensationsprodukte von omega-Hydroxycarbonsäuren wie omega-Hydroxycapronsäure oder Polymerisationsprodukte von Lactonen zum Beispiel gegebenenfalls substituierten omega-Caprolactonen. Als Polyester-Diole vorzugsweise verwendet werden Ethandiol-polyadipate, 1,4-Butandiolpolyadipate, Ethandiol-1,4-butandiolpolyadipate, 1,6-Hexandiol-neopentylglykolpolyadipate, 1,6-Hexandiol-1,4-butandiolpolyadipate und Polycaprolactone. Die Polyester-Diole besitzen zahlenmittlere Molekulargewichte Mₙ von 450 bis 10000 Dalton und können einzeln oder in Form von Mischungen untereinander zur Anwendung kommen.

Die hydroxylgruppenhaltigen Polymerisationsprodukte des Tetrahydrofurans (B) werden bevorzugt ohne die Mitverwendung weiterer langkettiger zerewitinoffaktive Polyole eingesetzt. 1,4-Butandiol (C) wird als Kettenverlängerungsmittel eingesetzt. Daneben können weitere zerewitinoffaktive Polyole als Kettenverlängerungsmittel mitverwendet werden. Sie besitzen im Mittel 1,8 bis 3,0 zerewitinoffaktive Wasserstoffatome und haben ein Molekulargewicht von 60 bis 400 Dalton. Hierunter versteht man neben Aminogruppen, Thiolgruppen oder Carboxylgruppen aufweisenden Verbindungen solche mit zwei bis drei, bevorzugt zwei Hydroxylgruppen.

Als zusätzliche Kettenverlängerungsmittel können aliphatische Diole mit 2 bis 14 Kohlenstoffatomen eingesetzt werden wie zum Beispiel Ethandiol, 1,2-Propandiol, 1,3-Propandiol, 2,3-Butandiol, 1,5-Pentandiol, 1,6-Hexandiol, Diethylenglykol und Dipropylenglykol. Geeignet sind jedoch auch Diester der Terephthalsäure mit Glykolen mit 2 bis 4 Kohlenstoffatomen zum Beispiel Terephthalsäure-bis-ethylenglykol oder Terephthalsäure-bis-1,4-butandiol, Hydroxyalkylenether des Hydrochinons, zum Beispiel 1,4-Di(beta-hydroxyethyl)-hydrochinon, ethoxylierte Bisphenole zum Beispiel 1,4-Di(beta-hydroxyethyl)-bisphenol A, (cyclo)aliphatische Diamine wie Isophorondiamin, Ethylendiamin, 1,2-Propylendiamin, 1,3-Propylendiamin, N-Methyl-propylen-1,3-diamin, N,N'-Dimethylethylendiamin und aromatische Diamine wie 2,4-Toluylendiamin, 2,6-Toluyiendiamin, 3,5-Diethyl-2,4-toluylendiamin oder 3,5-Diethyl-2,6-toluylendiamin oder primäre mono-, di-, tri- oder tetraalkylsubstituierte 4,4'-Diaminodiphenylmethane. Daneben können auch kleinere Mengen an Triolen zugesetzt werden.

Vorzugsweise wird 1,4-Butandiol ohne den Einsatz weiterer Kettenverlängerungsmittel verwendet.

Gegenüber Isocyanaten monofunktionelle Verbindungen können in Anteilen bis zu 2 Gew.-%, bezogen auf TPU, als so genannte Kettenabbrecher eingesetzt werden. Geeignet sind zum Beispiel Monoamine wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Die Kombination von 4,4'-Diphenylmethandiisocyanat mit 1,4-Butandiol liefert Hartblöcke mit hinreichend hoher Beständigkeit gegen Schmelzen der Proben bei Temperaturbelastung sowie hinreichende Kräfte bei 1 bis 100 % Dehnung und Reißfestigkeit. Die Weichblöcke aus hydroxylgruppenhaltigen Polymerisationsprodukten des Tetrahydrofurans sind relativ stabil gegen Hydrolyse, mikrobiellem Abbau und Oxidation. Daraus ergibt sich ein für Wickelbänder herausragend geeignetes Basispolymer welches für eine erfindungsgemäße Folie nur noch mit einem geeigneten halogenfreien Flammschutzmittel versehen werden muss und optional mit Stabilisatoren und einer Haftkleberschicht ausgerüstet werden sollte.

Als Flammschutzmittel (E) werden zum Beispiel anorganische oder vorzugsweise organische phosphorhaltiges Verbindungen gewählt. Beispiele sind Ammoniumpolyphosphat, Ethylendiaminpolyphosphat und Phosphorsäure- und Phosphonsäureester wie zum Beispiel Triphenylphosphat, Tricresylphosphat, Alkyphenylphosphate oder Diphenylkresylphosphat.

Besonders bevorzugt sind Hydrocarbyl (dihydrocarbylphosphate) der allgemeinen Formel 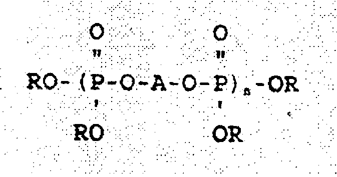 wobei R bevorzugt eine Arylgruppe (zum Beispiel Phenyl, Kresyl), A eine verbindende Gruppe wie Arylen (zum Beispiel Phenylen), Biarylen (zum Beispiel Biphenyl), zwei Arylengruppen welche durch eine weitere Gruppe wie -CH2-, -C(CH3) 2 -, -SO2 - oder - CO- verbunden sind, oder Alkylen (zum Beispiel Neopentyl) ist und n zwischen 1 und 10 liegt. Derartige Verbindungen werden großtechnisch aus Phosphorsäure oder Phosphoroxytrichlorid und Diphenolen wie Resorcin oder Bisphenol A (welche dann die Gruppe A bilden) und Monophenolen wie Phenol und Kresol (welche dann die Gruppe R bilden) hergestellt. Bevorzugt werden Phosphorsäure-1,3-phenylen-tetraphenylester und Phosphorsäure-1,3-Phenylen-tetraphenylester-Oligomere sowie Bisphenol A bis-(diphenylphosphate) und dessen Oligomere.

Ganz besonders bevorzugt werden Phosphorsäure- und Phosphonsäurederivate die bei Hydrolyse weder Phenol noch Kresol freisetzen, Beispiele hierfür sind Trixylylphosphat, butylierte Triphenylphosphate (zum Beispiel Fyrquel™ EHC-S), Phosphorsäure-1,3-Phenylen-tetraxylenylester und Salze von Phosphonsäuren wie Natrium-, Magnesium-, Zink- oder Aluminiumsalze der Propan- oder Phenylphosphonsäure (Benzolphosphonsäure).

Beispiele für einbaubare phosphorhaltige Verbindungen sind Phosphonate oder Phosphinoxide mit im Mittel mindestens 1,5 und höchstens 3,0 zerewitinoffaktiven Wasserstoffatomen und einem zahlenmittleren Molekulargewicht Mₙ von 60 bis 10000 Dalton weisen die folgende Strukturformel 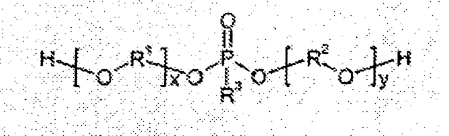 mit
- R¹, R²: verzweigte oder unverzweigte Alkylenreste mit 1 bis 24 C-Atomen, substituierte oder nicht-substituierte Arylenreste mit 6 bis 20 C-Atomen, substituierte oder nicht-substituierte Aralkylenreste mit 6 bis 30 C-Atomen, substituierte oder nicht-substituierte Alkarylenreste mit 6 bis 30 C-Atomen,
wobei R¹ und R² gleich oder verschieden sein können,
- R³: H, verzweigte oder unverzweigte Alkylreste mit 1 bis 24 C-Atomen, substituierte oder nicht-substituierte Arylreste mit 6 bis 20 C-Atomen, substituierte oder nicht-substituierte Aralkylreste mit 6 bis 30 C-Atomen, substituierte oder nicht-substituierte Alkarylreste mit 6 bis 30 C-Atomen,
x, y = 1 bis 50
oder 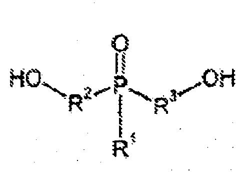
mit
- R¹: H, verzweigte oder unverzweigte Alkylreste mit 1 bis 24 C-Atomen, substituierte oder nicht-substituierte Arylreste mit 6 bis 20 C-Atomen, substituierte oder nicht-substituierte Aralkylreste mit 6 bis 30 C-Atomen, substituierte oder nicht-substituierte Alkarylreste mit 6 bis 30 C-Atomen,
- R², R³: verzweigte oder unverzweigte Alkylenreste mit 1 bis 24 C-Atomen, substituierte oder nicht-substituierte Arylenreste mit 6 bis 20 C-Atomen, substituierte oder nicht-substituierte Aralkylenreste mit 6 bis 30 C-Atomen, substituierte oder nicht-substituierte Alkarylenreste mit 6 bis 30 C-Atomen,
wobei R² und R³ gleich oder verschieden sein können
auf.

Zur Vermeidung der Verwendung umständlicher IUPAC-Bezeichnungen werden nachfolgend einige Substanzen mit ihrer CAS-Nr. charakterisiert.

Als stickstoffhaltige Flammschutzmittel (E) sind Melamincyanurat, Melamin, Biuret, Triuret, Ammelide, Ammeline, Cyanursäure, Tris(2-hydroxyethyl)isocyanurat, Bis(2-hydroxyethyl)isocyanurat, 2-Hydroxyethylisocyanurat, Tris(carbomethyl)isocyanurat, Tris(2-cyanoethyl)isocyanurat, Bis(2-cyanoethyl)isocyanurat, 2-Cyanoethylisocyanurat, Trimethylisocyanurat, HA(L)S wie CAS-Nr. 40601-76-1 oder 27676-62-6 oder 34137-09-2 oder 129757-67-1 oder 191680-81-6, Melam, Melem, Dicyandiamid, Guanadine, Biguanadine, Triphenylisocyanurat oder Tricresylisocyanurat geeignet. Bevorzugtes stickstoffhaltiges Flammschutzmittel ist Melamincyanurat.

Als phosphor- und stickstoffhaltiges Flammschutzmittel (E) kommen Verbindungen in Frage, die beide Elemente enthalten wie zum Beispiel Melaminphosphat, Melaminpolyphosphat, Harnstoffphosphat, Diethyl N, N-bis(2-hydroxyethyl)aminomethyl phosphonat, N,N-bis-(2-hydroxyalkyl)-aminomethanphosphonsäuredimethylester, Triethanolaminphosphat oder Phosphoroxytriamid.

Als Flammschutzmittel (E) sind auch andere halogenfreie Substanzen geeignet, Beispiele dafür sind Aluminiumhydroxid, Magnesiumhydroxid, expandierbarer oder exfolierter Graphit.

Bevorzugtes Flammschutzmittel (E) ist Melamincyanurat.

Die erfindungsgemäß verwandten thermoplastischen Polyurethane können als Hilfs- und Zusatzstoffe (H), welche keine Flammschutzmittel sind, bis zu vorzugsweise maximal 20 Gew.-%, bezogen auf die Gesamtmenge an TPU, der üblichen Hilfs- und Zusatzstoffe enthalten.
Typische Hilfs- und Zusatzstoffe sind Nucleierungsmittel, Gleitmittel wie Fettsäureester, deren Metallseifen, Fettsäureamide, Fettsäureesteramide und Siliconverbindungen, Antiblockmittel, Inhibitoren, Lichtschutzmittel, Farbstoffe, Pigmente, anorganische und/oder organische Füllstoffe, Weichmacher wie Adipate, Sebacate und Alkylsulfonsäureester, fungistatisch und bakteriostatisch wirkende Substanzen sowie Füllstoffe und deren Mischungen und Verstärkungsmittel wie faserartige Materialien. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 beziehungsweise 1964, dem Taschenbuch für Kunststoff Additive von R. Gächter und H. Müller (Hanser Verlag München 1990) oder der DE 29 01 774 A1 zu entnehmen. Als weitere Zusatzstoffe können Polymere mit weniger als 20 Gew.-% (bezogen auf das TPU Polymer) mitverwendet werden. Beispiele sind Thermoplaste wie Polyethylene, Ethylen/Vinylacetatcopolymere, Polypropylenhomopolymere oder -copolymere. Auch synthetische Elastomere wie hydrierte Styrol-Dien-Copolymere oder nicht schmelzbare Polymere wie EVA-Dispersionspulver oder Impact Modifier (zum Beispiel Acrylatelastomerteilchen mit einer Hülle aus PAN oder PMMA) können verwendet werden. Vorzugsweise werden keine hydrolyseempfindlichen polymeren Zusätze mit . Ester- oder Amidgruppen in der Polymerhauptkette mitverwandt (Beispiele: thermoplastische Polyetheresterelastomere oder Polyamide).

Die erfindungsgemäße Trägerfolie ist vorzugsweise im Wesentlichen frei von flüchtigen Weichmachern wie zum Beispiel DOP oder DINP und hat daher ein ausgezeichnetes Brandverhalten und geringe Emission (Weichmacherausdampfung, Fogging). Der Fogging-Wert liegt vorzugsweise über 90 %. Die Folie enthält vorzugsweise bis 5 phr phosphorfreie Weichmacher, insbesondere überhaupt keine phosphorfreien Weichmacher.

Wenn sehr hohe Fogging-Werte erforderlich sind, werden Phosphorsäure- und Phosphonsäureverbindungen bevorzugt, die eingebaut werden und die wegen ihres Molekulargewichtes von mindestens 300, vorzugsweise mindestens 400 Dalton wenig flüchtig sind, das heißt, Phosphatweichmacher mit einem Molekulargewichtes von 300 Dalton oder weniger oder vorzugsweise 400 Dalton oder weniger sollen vermieden werden.

Die erfindungsgemäß verwendete Folie enthält vorzugsweise ein Antioxidant (F). Die Menge ist vorzugsweise mindestens 1 phr und insbesondere mindestens 2 phr (die Angaben in phr bedeuten Gewichtsteile der betreffenden Komponente bezogen auf 100 Gewichtsteile aller Polymerkomponenten der Folie). Beispiele für sind Antioxidantien auf phenolischer oder aminischer Basis und sekundäre Antioxidantien auf Schwefel- oder Phosphorbasis. Die erfindungsgemäßen Wickelbänder enthalten vorzugsweise einer Kombination aus primären und sekundären Antioxidant, wobei die primäre und sekundäre Antioxidantfunktion in verschiedenen Molekülen vorliegen oder in einem Molekül vereinigt sein kann. Bei den aufgeführten Mengenangaben sind optionale Stabilisatoren wie Metalldesaktivatoren oder Lichtschutzmittel nicht eingerechnet.

Die Menge an sekundärem Antioxidant beträgt vorzugsweise mindestens 0,5 phr, insbesondere mindestens 1 phr.

Stabilisatoren für PVC-Produkte lassen sich nicht auf TPU übertragen. Sekundäre Antioxidantien bauen Peroxide ab und werden daher bei Dienelastomeren als Teil von Alterungsschutzpaketen verwendet. Überraschend wurde gefunden, dass eine Kombination von primären Antioxidantien (zum Beispiel sterisch gehinderten Phenolen oder C-Radikalfängern wie CAS 181314-48-7) und sekundären Antioxidantien (zum Beispiel Schwefelverbindungen, Phosphiten oder sterisch gehinderten Aminen), wobei die beiden Funktionen auch in einem Molekül vereinigt sein können, die Aufgabe auch bei dienfreien TPU löst. Vor allem wird die Kombination von primärem Antioxidant, vorzugsweise sterisch gehinderten Phenolen mit einem Molekulargewicht von mehr als 500 g/mol (vorzugsweise > 700 g/mol), mit einem phosphitischen sekundären Antioxidant (vorzugsweise mit einem Molekulargewicht > 600 g/mol) bevorzugt.

Insbesondere ist die Kombination aus einem wenig flüchtigen primären phenolischen Antioxidants und jeweils einem sekundären Antioxidants aus der Klasse der Schwefelverbindungen (bevorzugt mit einem Molekulargewicht von mehr als 400 g/mol, insbesondere > 500 g/mol) und aus der Klasse der Phosphite geeignet, wobei die phenolische, die schwefelhaltige und die phosphitische Funktionen nicht in drei verschiedenen Molekülen vorliegen müssen, sondern auch mehr als eine Funktion in einem Molekül vereinigt sein kann.

### Beispiele:

- Phenolische Funktion:
   CAS 6683-19-8 2082-79-3, 1709-70-2, 36443-68-2, 1709-70-2, 34137-09-2, 27676-62-6, 40601-76-1, 31851-03-3, 991-84-4
- Schwefelhaltige Funktion:
   CAS 693-36-7, 123-28-4, 16545-54-3, 2500-88-1, 16545-34-3, 29598-76-3
- Phosphitische Funktion:
   CAS 31570-04-4, 26741-53-7, 80693-00-1, 140221-14-3, 119345-01-6, 3806-34-6, 80410-33-9, 14650-60-8, 161717-32-4
- Phenolische und schwefelhaltige Funktion:
   CAS 41484-35-9, 90-66-4, 110553-27-0, 96-96-5, 41484
- Phenolische und aminische Funktion:
   CAS 991-84-4, 633843-89-0
- Aminische Funktion:
   CAS 52829-07-9, 411556-26-7, 129757-67-1, 71878-19-8, 65447-77-0

Die Kombination von CAS 6683-19-8 (zum Beispiel Irganox 1010) mit Thiopropionsäureester CAS 693-36-7 (Irganox PS 802) oder 123-28-4 (Irganox PS 800) mit CAS 31570-04-4 (Irgafos 168) ist besonders bevorzugt. Bevorzugt ist des Weiteren eine Kombination, bei welcher der Anteil an sekundärem Antioxidant den des primären übersteigt. Zusätzlich können noch Metalldesaktivatoren zur Komplexierung von Schwermetallspuren, welche die Alterung katalytisch beschleunigen können, zugefügt werden. Beispiele sind CAS 32687-78-8, 70331-94-1, 6629-10-3, Ethylendiamintetraessigsäure, N,N'-di-salicyliden-1,2-diaminopropan, 3-(N-salicylol)-amino-1,2,4-triazol (Palmarole ADK STAB CDA-1), N,N'-bis[3-(3',5'-di-tert-butyl-4'-hydroxyphenyl)propionyl]hydrazid (Palmarole MDA.P.10) oder 2,2'-oxamido-bis-[ethyl-3-(tert-butyl-4-hydroxyphenyl)propionat] (Palmarole MDA.P.11.).

Die Auswahl der genannten Alterungsschutzmittel hat besondere Bedeutung für die erfindungsgemäße Wickelfolie, da mit phenolischen Antioxidantien allein oder selbst in Kombination mit schwefelhaltigen Costabilisatoren nicht immer praxisgerechte Produkte erreicht werden können. Bei der Kalanderverarbeitung, bei der auf den Walzen ein relativ lang andauernder Zutritt von Luftsauerstoff unvermeidlich ist, stellt sich die Mitverwendung von Phosphitstabilisatoren als besonders geeignet für eine ausreichende Wärmealterungsstabilität des Produktes heraus. Selbst bei Extrusionsverarbeitung macht sich der Zusatz von Phosphiten bei der Alterungsprüfung des Produktes noch positiv bemerkbar. Für den Phosphitstabilisator wird eine Menge von mindestens 0,1, vorzugsweise mindestens 0,3 phr bevorzugt.

Die erfindungsgemäß verwendete Folie enthält vorzugsweise ein Hydrolyseschutzmittel (G). Es können zum Beispiel monomere oder polymere Carbodiimide, Oxazoline oder reaktive Polyharnstoffe eingesetzt werden. Bevorzugt wird ein polymeres Carbodiimid auf Basis aromatischer Isocyanate. Zur Herstellung und Struktur solcher Carbodimide siehe US 2,941,956 A, JP 04 733 279 A, J. Org. Chem., 28, 2069 bis 2075 (1963), Chemical Review, Vol. 81, No. 4, pp. 619 bis 621 (1981). Die Menge liegt bevorzugt bei mindestens 0,5 und insbesondere mindestens 2 phr.

Bevorzugt wird eine Kombination aus Antioxidant (F) und Hydrolyseschutzmittel (G) eingesetzt.

Geeignete erfindungsgemäße Katalysatoren (D) sind die nach dem Stand der Technik bekannten und üblichen tertiären Amine wie zum Beispiel Triethylamin, Dimethylcyclohexylamin, N-Methylmorpholin, N,N'-Dimethylpiperazin, 2-(Dimethylaminoethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche.

Bevorzugte Katalysatoren sind organische Metallverbindungen, insbesondere Titansäureester, Eisen- und Zinnverbindungen. Die Gesamtmenge an Katalysatoren in den erfindungsgemäßen TPU beträgt in der Regel etwa 0 bis 5 Gew.-%, bevorzugt 0 bis 2 Gew.-%, bezogen auf die Gesamtmenge an TPU.

Das erfindungsgemäß verwandte TPU kann kontinuierlich oder diskontinuierlich hergestellt worden sein. Die bekanntesten Herstellverfahren sind das Bandverfahren (GB 1 057 018 A) und das Extruderverfahren (DE 19 64 834 A1). Der Aufbau des TPU kann entweder schrittweise (Prepolymerdosierverfahren, Umsetzung der Komponenten (A) und (B) und danach mit (C) oder durch die gleichzeitige Reaktion aller Komponenten (A), (B) und (C) in einer Stufe (one-shot-Dosierverfahren) erfolgen. Vorzugsweise wird das Prepolymerverfahren benutzt.

Die Zugabe der Flammschutzmittel (E), der Antioxidantien (F), der Hydrolyseschutzmittel (G) und/oder der Hilfsstoffe (H) kann jeweils vor, während oder nach der Polyurethanreaktion erfolgen. Vorzugsweise wird mindestens ein Flammschutzmittel, insbesondere Melamincyanurat, schon während der Herstellungsprozesses des thermoplastischen Polyurethans zugefügt. Damit wird vermieden, dass ein großer Teil des Polyurethans in einem separatem Compoundierschritt thermisch verarbeitet werden muss, was nicht nur die Kosten erhöht, sondern auch durch vermeidbare thermische Belastung zu Abbau und schlechterer Altersstabilität führt.

Die vorliegende Erfindung hat hauptsächlich die Abwesenheit von Halogenen bei hoher Flammfestigkeit, Reißfestigkeit und Flexibilität zum Ziel. Wie ausgeführt steigen die thermischen Anforderungen der Anwendung, so dass zusätzlich eine erhöhte Beständigkeit gegenüber konventionellen PVC-Wickelbändern oder den in Entwicklung befindlichen PVC-freien Folienwickelbändern auf Polyolefinbasis erreicht werden soll. Zu diesem Zweck wird nicht ein beliebiges thermoplastisches Polyurethan eingesetzt, sondern eines mit der speziellen erfindungsgemäßen Zusammensetzung. Daher werden die Eigenschaften der vorliegenden Erfindung diesbezüglich im Folgenden ausführlich beschrieben.

Das erfindungsgemäße Produkt ist halogenfrei in dem Sinne, dass der Halogenhalt der Rohstoffe so niedrig ist, dass er für die Flammwidrigkeit keine Rolle spielt. Halogene in Spurenmengen, wie sie durch Verunreinigungen, Prozessadditive (Fluorelastomer) oder als Rückstände von Katalysatoren auftreten könnten, bleiben unberücksichtigt.

Der Verzicht auf Halogene zieht normalerweise die Eigenschaft der leichten Brennbarkeit nach sich, was den Sicherheitserfordernissen in elektrischen Anwendungen wie Haushaltsgeräten, Gebäuden oder Fahrzeugen nicht entspricht. Das erfindungemäße Wickelband weist selbstverlöschende Eigenschaften auf, wobei die bevorzugten Ausführungsformen des Wickelbandes in Brandtesten nach FMVSS 302 (waagerechte Probe) und/oder ASTM D 568 (senkrechte Probe) genannten Prüfbedingungen von selbst verlöschen.

Die Dicke der erfindungsgemäßen Folie liegt vorzugsweise im Bereich von 30 bis 180 µm, bevorzugt 50 bis 150 µm, insbesondere 55 bis 100 µm. Somit werden eine ausreichende Anschmiegsamkeit beim Wickeln, eine gute Handeinreißbarkeit und annehmbare Kosten erzielt. Das erfindungsgemäße Wickelband weist eine entsprechende Dicke erhöht um die Dicke der gegebenenfalls vorhandenen Haftklebebeschichtung auf. Die Oberfläche kann strukturiert oder glatt sein. Vorzugsweise ist die Oberfläche leicht matt eingestellt. Dies kann durch Verwendung eines Füllstoffs mit einer hinreichend hohen Teilchengröße oder durch eine Walze (zum Beispiel Prägewalze am Kalander oder mattierte Chillroll oder Prägewalze bei der Extrusion) erreicht werden.

Das erfindungsgemäße verwendete Wickelband ist vorzugsweise gefärbt (schwarz, weiß oder bunt), wobei die Trägerfolie und/oder eine weitere Schicht wie zum Beispiel die Klebemasse eingefärbt sind. Die verwendeten Pigmente sind vorzugsweise frei von giftigen Schwermetallen wie zum Beispiel auf Basis Blei, Cadmium oder Chrom.

Das erfindungsgemäße Wickelband weist in Längsrichtung eine Kraft bei 10 %-Dehnung von 2 bis 20 N/cm auf, vorzugsweise von 4 bis 11 N/cm, und bei 50 %-Dehnung eine Kraft von 3 bis 25 N/cm, vorzugsweise von 6 bis 17 N/cm.

Die 10%-Kraft ist ein Maß für die Steifigkeit der Folie, und die 50 %-Kraft ist ein Maß für die Anschmiegsamkeit beim Wickeln bei starker Deformation durch hohe Wickelspannung. Die 50 %-Kraft darf aber auch nicht zu niedrig liegen, weil sonst in der Regel die Reißfestigkeit zu gering ist.

Die Reißkraft (Bruchkraft) der Trägerfolie liegt bei mindestens 10 N/cm, vorzugsweise mindestens 20 N/cm.

Da TPUs sehr zäh sein können, sind gegebenenfalls Maßnahmen zur Verbesserung der Handeinreißbarkeit des Wickelbandes erforderlich wie zum Beispiel Abmischung mit Füllstoffen, unverträglichen thermoplastischen oder nicht schmelzbaren Polymeren, durch rau geschnittene Seitenkanten, die bei mikroskopischer Betrachtung Risse in der Folie ausbilden, die dann offenbar ein Weiterreißen begünstigen, oder durch mit nachträglich zum Beispiel durch Anstanzen angebrachten Einkerbungen versehenen Seitenkanten. Raue Schnittkanten können insbesondere durch die Anwendung eines Quetschschnitts mit stumpfen oder definiert gezackten rotierenden Messern auf Ballenware (Jumbos, Rollen in großer Länge) oder durch einen Abstechschnitt mit feststehenden Klingen oder rotierenden Messern von Stangenware (Rollen in Produktionsbreite und verkaufsüblicher Länge) erzeugt werden. Die Bruchdehnung kann durch einen geeigneten Schliff der Klingen und Messer eingestellt werden. Bevorzugt ist die Ausführung der Herstellung von Stangenware mit Abstechschnitt mit stumpfen feststehenden Klingen. Durch starkes Abkühlen der Stangen vor dem Schneiden kann die Rissbildung beim Schneidprozess noch verbessert werden.

Voraussetzungen für eine ausreichende Wärmebeständigkeit und Kurzzeithitzebeständigkeit sind ein hinreichender Kristallitschmelzpunkt des TPU (vorzugsweise mindestens 158 °C und besonders bevorzugt mindestens 170 °C) sowie eine Beständigkeit gegen Alterung durch Abbau was durch Antioxidantien und/oder Hydrolyseschutzmittel sichergestellt werden kann.

Das erfindungsgemäße Wickelband weist eine hohe Temperaturbeständigkeit auf, in bevorzugten Ausführungsformen soll eine Bruchdehnung von mindestens 100 % nach 312 Stunden Lagerung bei 140 °C (Wärmebeständigkeitstest) beziehungsweise eine Kurzzeithitzebeständigkeit von 170 °C (nach 30 min keine Risse oder geschmolzene Stellen) aufweisen.

Zur Erreichung dieser Kraftwerte als auch der Wärmebeständigkeit enthält die Folie des Wickelbandes ein TPU mit hinreichend hohem Hartblockanteil, weshalb die Shore D-Härte des TPU-Rohstoffs vorzugsweise mindestens 35 und besonders bevorzugt mindestens 50 beträgt, das entspricht in etwa Shore A-Härten von vorzugsweise mindestens 85 beziehungsweise besonders bevorzugt mindestens 100. Die im Stand der Technik dargestellten flammfesten Klebebänder verwenden deutlich weichere TPU (Shore A 70 bis 80) als die hier angestrebten flammfesten Klebebänder mit eingebautem Flammschutzmittel. Wenn den Klebebändern aus solchen weichen TPU noch Weichmacher oder Phosphorsäureester als Flammschutzmittel zugesetzt werden, werden diese dann noch viel weicher, das heißt noch ungeeigneter als die Klebebänder mit TPU mit Shore A-Härten von 70 bis 80.

Die Herstellung der Folie erfolgt auf einem Kalander oder durch Extrusion wie zum Beispiel im Blas- oder Castprozess. Diese Verfahren sind zum Beispiel in Ullmann's Encyclopedia of Industrial Chemistry, 6. Auflage, Wiley-VCH 2002 beschrieben. Bei der Mitverwendung von festen oder flüssigen Additiven für das TPU wird ein Compound aus den Hauptkomponenten oder allen Komponenten in einem Compounder wie Kneter (zum Beispiel Stempelkneter) oder Extruder (zum Beispiel Zweischneckenextruder, Planetwalzenextruder) hergestellt und dann in eine feste Form (zum Beispiel Granulat) überführt, welche dann in einer Folienextrusionsanlage oder in einem Extruder, Kneter oder Walzwerk einer Kalanderanlage weiterverarbeitet werden.

In einer ersten besonders bevorzugten Ausführungsform ist zumindest auf einer Seite der Trägerfolie eine Klebemasse, insbesondere eine Haftklebemasse aufgebracht.

Die Menge der bevorzugt vorhandenen Klebstoffschicht beträgt 10 bis 40 g/m², vorzugsweise 18 bis 28 g/m² (das ist die Menge nach einer eventuellen notwendigen Entfernung von Wasser oder Lösungsmittel; die Zahlenwerte entsprechen auch in etwa der Dicke in µm). In einem Fall mit Klebstoffbeschichtung beziehen sich die hier gemachten Angaben zur Dicke und zu dickenabhängigen mechanischen Eigenschaften ausschließlich auf die TPU-haltige Schicht des Wickelbandes ohne Berücksichtung von Klebstoffschicht oder weiteren Schichten, die in Zusammenhang mit Klebstoffschichten vorteilhaft sind. Die Beschichtung muss nicht vollflächig sein, sondern kann auch teilflächig ausgeführt sein. Als Beispiel sei ein Wickelband mit je einem haftklebenden Streifen an den Seitenkanten genannt. Diese kann zu etwa rechteckigen Blättern abgeschnitten werden, welche mit dem einem Klebstoffstreifen auf dem Kabelbündel aufgeklebt und dann so weit gewickelt werden, bis der andere Klebstoffstreifen auf der Wickelbanddrückseite verklebt werden kann. Eine solche schlauchartige Umhüllung, ähnlich einer Sleeve-Verpackung, weist den Vorteil auf, dass die Biegsamkeit des Kabelbaumes durch die Umwicklung praktisch nicht verschlechtert wird.

Als Klebstoff kommen alle gängigen Typen in Frage, vor allem auf Basis von Kautschuk. Solche Kautschuke können zum Beispiel Homo- oder Copolymere des Isobutylens, des 1-Butens, des Vinylacetats, des Ethylens, von Acrylsäureestern, des Butadiens oder des Isoprens sein. Besonders geeignet sind Rezepturen auf Basis von Polymeren basierend auf Acrylsäureestern, Vinylacetat oder Isopren.

Zur Optimierung der Eigenschaften kann die zum Einsatz kommende Selbstklebemasse mit einem oder mehreren Additiven wie Klebrigmachern (Harzen), Weichmachern, Füllstoffen, Flammschutzmitteln, Pigmenten, UV-Absorbern, Lichtschutz-, Alterungsschutzmitteln, Photoinitiatoren, Vernetzungsmitteln oder Vernetzungspromotoren abgemischt sein. Klebrigmacher sind beispielsweise Kohlenwasserstoffharze (zum Beispiel Polymere auf Basis ungesättigter C₅- oder C₉-Monomere), Terpenphenolharze, Polyterpenharze aus Rohstoffen wie zum Beispiel α- oder β-Pinen, aromatische Harze wie Cumaron-Inden-Harze oder Harze auf Basis Styrol oder α-Methylstyrol wie Kolophonium und seine Folgeprodukte, zum Beispiel disproportionierte, dimerisierte oder veresterte Harze, zum Beispiel wozu Umsetzungsprodukte mit Glycol, Glycerin oder Pentaerythrit, um nur einige zu nennen, sowie weitere Harze (wie beispielsweise aufgeführt in Ullmanns Enzyklopädie der technischen Chemie, Band 12, Seiten 525 bis 555 (4. Auflage), Weinheim) zählen. Bevorzugt werden Harze ohne leicht oxidierbare Doppelbindungen wie Terpenphenolharze, aromatische Harze und besonders bevorzugt Harze, die durch Hydrierung hergestellt sind wie zum Beispiel hydrierte Aromatenharze, hydrierte Polycyclopentadienharze, hydrierte Kolophoniumderivate oder hydrierte Terpenharze eingesetzt.

Geeignete Füllstoffe und Pigmente sind beispielsweise Ruß, Titandioxid, Calciumcarbonat, Zinkcarbonat, Zinkoxid, Silicate oder Kieselsäure. Geeignete beimischbare Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel niedermolekulare Nitril- oder Polyisoprenkautschuke), flüssige Polymerisate aus Buten und/oder Isobuten, Acrylsäureester, Polyvinylether, Flüssig- und Weichharze auf Basis der Rohstoffe von Klebharzen, Wollwachs und andere Wachse oder flüssige Silikone. Vernetzungsmittel sind beispielsweise Isocyanate, Phenolharze oder halogenierte Phenolharze, Melamin- und Formaldehydharze. Geeignete Vernetzungspromotoren sind zum Beispiel Maleinimide, Allylester wie Triallylcyanurat, mehrfunktionelle Ester der Acryl- und Methacryläure. Alterungsschutzmittel sind beispielsweise sterisch gehinderte Phenole, die zum Beispiel unter dem Handelsnamen Irganox™ bekannt sind.

Eine Vernetzung ist vorteilhaft, da die Scherfestigkeit (zum Beispiel ausgedrückt als Holding Power) erhöht wird und sich damit die Neigung zu Deformationen der Rollen bei Lagerung (Teleskopieren oder Bildung von Hohlstellen, auch Gaps genannt) verringert. Auch das Ausquetschen der Haftklebemasse wird verringert. Dies drückt sich in klebfreien Seitenkanten der Rollen und klebfreien Kanten des in einer spiralförmigen Bewegung um Kabel beziehungsweise einen Kabelbaum geführten Wickelbandes aus. Die Holding Power liegt vorzugsweise oberhalb von 150 min.

Die Klebkraft auf Stahl sollte im Bereich von 1,5 bis 3 N/cm liegen.

Das erfindungsgemäße Wickelband weist bevorzugt eine Abrollkraft von 1,2 bis 6,0 N/cm, ganz besonders bevorzugt von 1,6 bis 4,0 N/cm und insbesondere 1,8 bis 2,5 N/cm bei 300 mm/min Abrollgeschwindigkeit auf.

Zusammenfassend weist die bevorzugte Ausführungsform einseitig eine lösungsmittelfreie Selbstklebemasse auf, welche durch Coextrusion, Schmelz- oder Dispersionsbeschichtung zustande gekommen ist. Insbesondere werden Klebmassen auf Polyacrylat-Basis in Form Dispersionen oder Hotmelts bevorzugt.

Vorteilhaft ist die Verwendung einer Primerschicht zwischen der Trägerfolie und Klebmasse zur Verbesserung der Haftung der Klebmasse auf der Folie und somit der Vermeidung von Übertragung von Klebstoff auf die Folienrückseite während des Abwickelns der Rollen.

Als Primer sind die bekannten Dispersion- und Lösungsmittelsysteme verwendbar zum Beispiel auf Basis von isopren- oder butadienhaltigen Kautschuk und/oder Cyclokautschuk. Isocyanate oder Epoxyharze als Additive verbessern die Haftung und erhöhen zum Teil auch die Scherfestigkeit des Haftklebstoffes. Physikalische Oberflächenbehandlungen wie Beflammung, Corona oder Plasma oder Coextrusionsschichten sind ebenfalls geeignet, die Haftung zu verbessern. Besonders bevorzugt ist die Anwendung solcher Verfahren auf lösungsmittelfreie Klebstoffschichten, insbesondere solche auf Acrylatbasis.

Eine Beschichtung der Rückseite kann durch bekannte Releasemittel (gegebenenfalls mit anderen Polymeren abgemischt) erfolgen. Beispiele sind Stearyl-Verbindungen (zum Beispiel Polyvinylstearylcarbamat, Stearylverbindungen von Übergangsmetallen wie Cr oder Zr), Harnstoffe aus Polyethylenimin und Stearylisocyanat, Polysiloxane (zum Beispiel als Copolymer mit Polyurethanen oder als Propfcopolymer auf Polyolefin), thermoplastische Fluorpolymere. Der Begriff Stearyl steht als Synonym für alle geraden oder verzweigten Alkyle oder Alkenyle mit einer C-Zahl von mindestens 10 wie zum Beispiel Octadecyl.

Beschreibungen der üblichen Klebmassen sowie Rückseitenbeschichtungen und Primern finden sich zum Beispiel in "Handbook of Pressure Sensitive Adhesive Technology", D. Satas, (3. Auflage).

Die Stangenware kann zur Erhöhung der Abrollkraft oder Relaxation der Spannungen der Folien vor dem Schneiden einer Wärmelagerung unterzogen werden. Das Schneiden von Wickelbändern mit Gewebe-, Vlies- und Folienträger (zum Beispiel PVC) erfolgt durch Scherenschnitt (zwischen zwei rotierenden Messern), Abstechschnitt (feststehende oder rotierender Messer werden in eine rotierende Stange des Produktes gedrückt), Klingenschnitt (die Bahn wird bei Durchlauf durch scharfe Klingen geteilt) oder Quetschschnitt (zwischen einem rotierenden Messer und einer Walze).

Das erfindungsgemäße Wickelband ist ausgezeichnet zum Umwickeln von langgestrecktem Gut wie Feldspulen oder Kabelsätzen in Fahrzeugen geeignet. Die Flexibilität ist von herausragender Bedeutung, da bei Anwendung auf Drähten und Kabeln nicht nur in einer spiralförmigen Bewegung gewickelt, sondern an Verzweigungsstellen, Steckern oder Befestigungsclipsen auch faltenfrei kurvenflexibel gewickelt werden muss. Darüber hinaus ist erwünscht, dass das Wickelband den Kabelstrang elastisch zusammenzieht. Das erfindungsgemäße Wickelband ist ebenfalls für andere Anwendungen geeignet wie zum Beispiel zur Abdichtung von Lüftungsrohren im Klimabau, da die hohe Flexibilität eine gute Anschmiegsamkeit an Nieten, Sicken und Falzen sichert. Diese mechanischen Eigenschaften können nur von einem weichen flexiblen Wickelband erreicht werden. Die Aufgabe, die nötige Flexibilität durch Vermeidung des Zusatzes größerer Mengen an Flammschutzmitteln zu erreichen, wird erfindungsgemäß gelöst.

Den heutigen arbeitshygienischen und ökologischen Anforderungen wird Rechnung getragen, indem auf den Einsatz halogenhaltiger Rohstoffe verzichtet wird. Die Halogenfreiheit ist für die thermische Verwertung von Abfällen, die solche Wickelbänder enthalten, von außerordentlicher Bedeutung (zum Beispiel Müllverbrennung der Kunststofffraktion vom Fahrzeugrecycling) aber auch bei Kabel- oder Gebäudebränden, da keine toxischen Rauchgase entstehen.

Im Zuge der immer komplizierter werdenden Elektronik und der steigenden Zahl von elektrischen Verbrauchern in den Automobilen werden auch die Leitungssätze immer komplexer. Bei steigenden Querschnitten der Kabelbäume wird die induktive Erhitzung immer größer, während die Wärmeableitung abnimmt. Dadurch steigen die Anforderungen an die Wärmebeständigkeit der verwendeten Materialien. Die standardmäßig verwendeten PVC-Materialien für die Wickelklebebänder stoßen hier an ihre Grenzen. Auch dieses Problem kann nunmehr als gelöst angesehen werden.

Die Folie für das erfindungsgemäße Wickelband weist eine möglichst hohe Temperaturbeständigkeit auf, das heißt eine Kurzzeithitzebeständigkeit bei 170 °C und eine Wärmebeständigkeit bei 140 °C, daher wird ein TPU mit deutlich höherem Erweichungspunkt benötigt als die in der JP 2005 264 112 A erwähnten TPUs zur Modifizierung (Weichmachung) der Polyamidfolie. Das neue erfindungsgemäße Wickelband enthält ein TPU mit einem hochschmelzenden Hartblock aus Butandiol-(1,4) und 4,4'-Diphenylmethandiisocyanat, die Kristallitschmelzpunkte davon liegen erfahrungsgemäß je nach Größe der Hartblöcke zwischen 155 und 197 °C. Dies liegt deutlich höher als die in der japanischen Schrift zitierten 60 bis 120 °C für das TPU. Dort wird die Funktion der Beständigkeit gegen Schmelzen von dem Polyamid übernommen, und die PU-Komponente fungiert als Weichmacher, in vorliegender Erfindung übernimmt das erfindungsgemäße Polyurethan beide Funktionen. Auch aufgrund der gewünschten Festigkeit und Moduli (damit gleichzeitig auch der dafür notwendigen höheren Shore-Härten) werden für das erfindungsgemäße Wickelband TPU-Rohstoffe mit relativ hochschmelzendem Hartblockanteil eingesetzt, woraus Verarbeitungstemperaturen von 200 °C und mehr resultieren. Zu der in der JP 2005 264 112 A genannten Polyamidfolie wird erwähnt, dass sie sich schon ab 180 °C nicht mehr verarbeiten lässt. Die in der JP 2005 264 112 A bevorzugte Shore A-Härte liegt bei 70 bis 80 (im Beispiel 75), wohingegen erfindungsgemäß Shore A-Härten von 87 bis über 100 vorliegen (da über 100 nicht messbar ist, werden hier die Härten in der Shore D-Skala beschrieben). Die Schrift beschreibt nicht die Art des Haftklebers, lediglich das Beispiel weist auf ein Acrylatpolymer hin. Nach dem Stand der Technik für Polyurethanklebebänder muss davon ausgegangen werden, dass es sich um eine Lösungmittelacrylatmasse handelt. Die vorliegende Erfindung stellt auf ein in jeder Hinsicht umweltfreundliches Produkt ab, daher werden bevorzugt lösungsmittelfreie Haftkleber wie Dispersionen oder Hotmelts eingesetzt. Der Schrift ist sodann nicht zu entnehmen, dass das Klebeband farbig sein könnte, wohingegen das erfindungsgemäße Wickelband schwerpunktmäßig farbige Wickelbänder zum Ziel hat.

### Prüfmethoden

Die Messungen werden bei einem Prüfklima von 23 ± 1 °C und 50 ± 5 % rel. Luftfeuchte durchgeführt.

Der Kristallitschmelzpunkt (T_{cr}) wird mit DSC nach ISO 3146 ermittelt. Da frisch verarbeitete TPU's einen extrem breiten Schmelzbereich aufweisen, weil sie sich noch nicht im thermodynamischen Endzustand der Kristallisation befinden, werden die Proben vor Bestimmung des Kristallitschmelzpunktes 24 Stunden bei 140 °C getempert.

Die Shore A- und Shore D-Härte werden nach ISO 868 ermittelt.

Die Hydrolysebeständigkeit wird durch Lagerung der Probe in warmem destilliertem Wasser ermittelt. Nach 1000 Stunden bei 80 °C wird die Probe 24 Stunden bei 80 °C im Vakuum getrocknet und anschließend die Abnahme der Reißfestigkeit gegenüber dem Frischzustand bestimmt. Wenn die Reißfestigkeit weniger als 50 % abgenommen hat, ist der Test bestanden (P, passed), und wenn sie mindestens um 50 % abgenommen hat, ist der Test nicht bestanden (NP, not passed).

Das Zugdehnungsverhalten des Wickelbandes wird an Prüflingen vom Typ 2 (rechteckige 150 mm lange und nach Möglichkeit 15 mm breite Prüfstreifen) nach DIN EN ISO 527-3/2/300 mit einer Prüfgeschwindigkeit von 300 mm/min, einer Einspannlänge 100 mm und einer Vorkraft von 0,3 N/cm ermittelt. Im Fall von Mustern mit rauen Schnittkanten sind die Kanten mit einer scharfen Klinge vor dem Zugversuch zu besäumen. Das Zugdehnungsverhalten wird, wenn nicht anders angegeben, in Maschinenrichtung (MD, Laufrichtung) geprüft. Die Kraft wird in N/Streifenbreite und die Bruchdehnung in % ausgedrückt. Die Prüfergebnisse, insbesondere die Bruchdehnung (Reißdehnung), sind durch eine hinreichende Zahl von Messungen statistisch abzusichern.

Die Klebkräfte werden bei einem Abzugswinkel von 180° nach AFERA 4001 an (nach Möglichkeit) 15 mm breiten Teststreifen bestimmt. Hierbei werden Stahlplatten nach AFERA-Norm als Prüfuntergrund verwendet soweit kein anderer Haftgrund genannt ist.

Die Dicke der Folie wird nach DIN 53370 bestimmt (Eine eventuelle Haftklebstoffschicht wird von der gemessenen Gesamtdicke abgezogen).

Die Holding Power wird nach der PSTC 107 (10/2001) bestimmt, wobei das Gewicht 20 N beträgt und die Maße der Verklebungsfläche 20 mm in der Höhe und 13 mm in der Breite beträgt.

Die Abrollkraft wird bei 300 mm/min nach DIN EN 1944 gemessen.

Die Handeinreißbarkeit lässt sich nicht in Zahlen ausdrücken, auch wenn Bruchkraft, Bruchdehnung und Schlagzugzähigkeit (alles längs gemessen) von wesentlichem Einfluss sind.

### Bewertung:

- +++ = sehr leicht,
- ++ = gut,
- + = noch verarbeitbar,
- = schwer verarbeitbar,
- -- = nur mit hohem Kraftaufwand abreißbar, die Enden sind unsauber,
- --- = nicht verarbeitbar

Das Brandverhalten wird nach FMVSS 302 (waagerechte Probe) beziehungsweise ASTM D 568 (senkrechte Probe) gemessen. Bei FMVSS 302 liegt die Haftkleberbeschichtung nach oben. Diese Methoden erlauben auch eine Bestimmung der Brandgeschwindigkeit brennbarer Proben. Es wird lediglich beurteilt, ob die Probe bis zum Erreichen der 2. Marke (Endmarke) brennt (not passed) oder vorher von selbst verlöscht (passed). Die MVSS 302 (Motor Vecile Safety Standard, US) wurde auch zu einer ISO-Norm weiterentwickelt (ISO 3795).

Die Temperaturbeständigkeit wird nach zwei Methoden bestimmt. Das Wickelband wird zuerst auf eine silikonisierte Polyesterfolie verklebt und in der Wärme gelagert. Nach Ablauf der Prüfzeit wird die Probe 30 min bei 23 °C abgekühlt. Beim Wärmebeständigkeitstest wird nach 312 Stunden Lagerung bei 140 °C geprüft ob die Bruchdehnung noch mindestens 100 % beträgt. Die Prüfung der Kurzzeithitzebeständigkeit erfolgt durch 30 Minuten Lagerung der Probe bei 170 °C, anschließender Wicklung von mindestens 3 Windungen bei 50 %-iger Überlappung um einen Dorn von 10 mm Durchmesser und anschließender Beurteilung, ob das Muster Beschädigungen (zum Beispiel Risse, geschmolzene Stellen) aufweist.

Beim Kältetest wird der oben beschriebene Probekörper in Anlehnung an ISO/DIS 6722 4 Stunden auf -40 °C abgekühlt und die Probe von Hand auf einen Dorn von 5 mm Durchmesser gewickelt. Die Muster werden visuell auf Fehler (Risse) im Klebeband geprüft.

Die Durchschlagspannung wird nach ASTM D 1000 gemessen. Als Zahl wird der höchste Wert genommen, dem das Muster bei dieser Spannung eine Minute standhält. Diese Zahl wird auf eine Probendicke von 100 µm umgerechnet.

### Beispiel:

Eine Probe von 200 µm Dicke hält nach einer Minute eine maximale Spannung von 6 kV stand, die berechnete Durchschlagspannung beträgt 3 kV/100 µm.

Der Fogging-Wert wird nach DIN 75201 A ermittelt.

Folgende Beispiele sollen die Erfindung erläutern, ohne deren Umfang zu beschränken.

### Erläuterung der in den Beispielen eingesetzten PU-Rohstoffe

- Terathane™ 1000:: Polyetherdiol auf Basis Tetrahydrofuran mit einem Molekulargewicht von Mₙ = 1000 Dalton (DuPont)
- Terathane™ 650:: Polyetherdiol auf Basis Tetrahydrofuran mit einem Molekulargewicht von Mₙ = 650 Dalton (DuPont)
- Bester™ 101:: Polyesterdiol mit einem Molekulargewicht von Mₙ = 1000 Dalton (Rohm&Haas)
- Voranol™ P 1010:: Polypropylenglycoldiol mit einem Molekulargewicht von Mₙ = 1000 Dalton (Dow Chemical)
- MDI:: 4,4'-Diphenylmethandiisocyanat
- Exolit™ OP 560:: Flammschutzmittel auf Basis Diol-Phosphonat mit zerewitinoffaktiven Wasserstoffatomen (Clariant)
- NORD-MIN™ MC-25J:: Melamincyanurat (Nordmann-Rassmann)
- Fyrolflex™ RDP:: Resorcinolphosphatoligomer (Akzonobel) der Formel 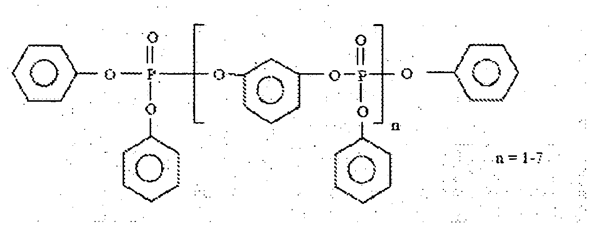
- BDO:: 1,4-Butandiol
- Irganox™ 1010:: Tetrakis(methylen-(3,5-di-tert.-butyl-4-hydroxycinnamate))-methan (Ciba Specialty Chemicals)
- Irganox™ PS 800:: Dilauryl thiodipropionate (Ciba Specialty Chemicals)
- Elastollan™ Konz 952:: Masterbatch.Irganox™ 1010 in TPU (Elastogran)
- Licowax™ C:: Trennmittel (Clariant Würtz)
- Stabaxol™ KE 9463:: Hydrolyseschutzmittel auf Basis eines aromatischen Carbodiimids (Rheinchemie)
- Carbodilite™ V-04B:: Hydrolyseschutzmittel auf Carbidiimidbasis (Nisshinbo Industries)

### Beispiel 1

Ein Gemisch aus 1045 kg Terathane™ 1000, 6,3 kg Irganox™ 1010, 1000 kg NORD-MIN™ MC-25J und 10 kg Licowax™ C wurde unter Rühren mit einem Flügelrührer mit einer Drehzahl von 500 UpM auf 160 °C hochgeheizt, danach wurden 713 kg MDI zugegeben. Nach Erreichen der maximalen Reaktionstemperatur wurde 30 s nachgerührt, wonach 125 kg BDO und 100 kg Exolit™ OP 560 zugegeben wurden.

Anschließend wurde 100 s gerührt, wonach das TPU ausgegossen wurde. Zum Schluss wurde das Material 30 min bei 80 °C nachbehandelt.

Das fertige TPU wurde geschnitten, granuliert und unter Zusatz von 5 Gew.-% eines Schwarzbatches in trockenem Zustand einem Compounder zugeführt. Dieser speiste den Spalt eines Kalanders vom Typ "Inverted L", die Verarbeitungstemperaturen lagen um 220 °C. Mit Hilfe der Kalanderwalzen wurde ein Film mit glatter Oberfläche einer Dicke von 80 µm ausgeformt.

Der Film wurde eine Woche gelagert, auf der Beschichtungsanlage mit Walzen bei 60 °C zur Verbesserung der Planlage egalisiert und nach einer Coronabehandlung auf der einen Seite mit einer Releaseschicht versehen und auf der anderen mit einem wässrigen Acrylathaftkleber (Primal PS 83 D von Rohm und Haas) mittels eines Rakels mit einem Auftragsgewicht von 24 g/m² versehen. Das fertige Wickelband wurde zu Stangen mit 33 m Lauflänge auf 1-Zoll-Kern (25 mm) gewickelt. Das Schneiden erfolgte durch Abstechen der Stangen mittels feststehender Klinge mit nicht sehr spitzem Winkel (straight knife) in 29 mm breite Rollen.

### Beispiel 2

Analog Beispiel 1 wurde aus MDI und Terathane™ 1000 im Molverhältnis 2,5 : 1 ein Prepolymer in Gegenwart von Irganox™ 1010, NORD-MIN™ MC-25J und Fyrolflex™ RDP hergestellt und mit 95 Mol-% der äquivalenten Menge BDO umgesetzt. Die Gehalte der Additive sind (bezogen auf 100 phr TPU-Polymer) 0,3 phr Irganox™ 1010, 23 phr NORD-MIN™ MC-25J und 4 phr Fyrolflex™ RDP.

Das fertige TPU wurde geschnitten, granuliert und unter Zusatz von 5 % Masterbatch weiß und 5 % Stabaxol™ KE 9463 bei einer Temperatur von 180 bis 200 °C zu einer 100 µm Blasfolie verarbeitet.

Die Trägerfolie wurde einer einseitigen Flammvorbehandlung unterzogen und nach 10 Tagen Lagerung mit Acronal DS 3458 mittels eines Walzenauftragswerks bei 50 m/min beschichtet. Die Temperaturbelastung des Trägers wurde durch eine gekühlte Gegendruckwalze reduziert. Der Masseauftrag betrug ca. 35 g/m². Eine geeignete Vernetzung wurde in-line vor der Aufwicklung durch Bestrahlung mit einer UV-Anlage erreicht, die mit 6 Mitteldruck-Hg-Lampen à 120 W/cm ausgestattet ist. Die bestrahlte Bahn wurde zu Stangen mit 33 m Lauflänge auf 1 1/4-Zoll-Kern (31 mm) gewickelt. Das Schneiden erfolgte durch Abstechen der Stangen mittels feststehender Klinge (straight knife) in 25 mm breite Rollen.

### Beispiel 3

Analog Beispiel 1 wurde aus MDI und Terathane™ 650 im Molverhältnis 2,2 : 1 ein Prepolymer in Gegenwart von Irganox™ 1010 und Melaminpolyphosphat (Dayang Chemicals) hergestellt und mit 95 Mol-% der äquivalenten Menge BDO umgesetzt. Am Ende der Reaktion wurde Carbodilite™ V-04B zugesetzt. Die Gehalte der Additive sind (bezogen auf 100 phr TPU-Polymer) 0,1 phr Irganox™ 1010, 27 phr Melaminpolyphosphat und 2 phr Carbodilite™ V-04B.

Das fertige TPU wurde geschnitten, granuliert und unter Zusatz von 5 Gew.-% eines Schwarzbatches und 5 Gew.-% eines Hydrolyseschutzmittelmasterbatches (KE 9463 von Rhein-Chemie = 20 % Stabaxol™ P200 in TPU) im Cast-Verfahren (Flachdüse mit Chillroll) zu einer 70 µm dicken Folie ausgeformt.

Eine Seite wurde mit einem Primer aus 5 Teilen MDI, 45 Teilen Naturkautschuk und 50 Teilen Cyclokautschuk mit 0,6 g/m² beschichtet und getrocknet. Die Klebmassenbeschichtung wurde direkt auf die Haftvermittlerschicht mittels Kommarakel mit einem Auftragsgewicht von 18 g/m² (bezogen auf Trockensubstanz) aufgetragen. Die Klebmasse bestand aus einer Lösung einer Naturkautschukklebemasse in n-Hexan mit einem Feststoffgehalt von 30 Gewichtsprozent. Diese bestand aus 50 Teilen Naturkautschuk, 10 Teilen Zinkoxid, 3 Teilen Kolophoniumharz, 6 Teilen Alkylphenolharz, 17 Teilen Terpenphenolharz, 12 Teilen Poly-β-Pinenharz, 1 Teil Antioxidant Irganox 1076 und 2 Teilen mineralischem Öl. Die Trocknung des Nachstriches erfolgte im Trockenkanal bei 100 °C. Die Folie wurde unmittelbar dahinter in einem Verbundschneidautomaten mit einem Messerbalken mit scharfen Klingen in 19 mm Abstand zu Rollen auf Standardklebebandkernen (3 Zoll) geschnitten.

### Vergleichsbeispiel 1

Die Herstellung erfolgte wie in Beispiel 1, jedoch wurde das Terathane™ 1000 durch die gleiche Menge Bester™ 101 ersetzt.

### Vergleichsbeispiel 2

Die Herstellung erfolgte wie in Beispiel 2, jedoch wurde das Terathane™ 1000 durch die gleiche Menge Voranol™ P 1010 ersetzt.

### Vergleichsbeispiel 3

Die Herstellung erfolgte wie in Beispiel 2, jedoch wurden MDI durch die äquimolare Menge Hexamethylendiisocyanat und BDO durch die äquimolare Menge Hexandiol-(1,6) ersetzt.

### Vergleichsbeispiel 4

Zur Beschichtung wurde eine konventionelle Folie für Isolierband von Singapore Plastic Products Pte. unter der Bezeichnung F2104S eingesetzt. Die Folie enthielt nach Herstellerangaben ca. 100 phr (parts per hundred resin) Suspensions-PVC mit dem K-Wert 63 bis 65, 43 phr DOP (Di-2-ethylhexylphthalat), 5 phr dreibasisches Bleisulfat (TLB, Stabilisator), 25 phr gemahlene Kreide (Bukit Batu Murah Malaysia mit Fettsäure-Coating), 1 phr Furnaceruß und 0,3 phr Stearinsäure (Gleitmittel). Die Nenndicke betrug 100 µm, und die Oberfläche war glatt aber matt.

Auf der einen Seite wurde der Primer Y01 von Four Pillars Enterprise/Taiwan aufgetragen (analytisch acrylatmodifizierter SBR-Kautschuk in Toluol) und darauf 23 g/m² des Klebstoffs IV9 von Four Pillars Enterprise/Taiwan (analytisch feststellbare Hauptkomponente: SBR und Naturkautschuk, Terpenharz und Alkylphenolharz in Toluol). Die Folie wurde unmittelbar nach dem Trockner mit einem Messerbalken mit scharfen Klingen in 25 mm Abstand in einem Automaten zu Rollen geschnitten.

**Eigenschaften der Beispiele und Vergleichsbeispiele**

| | ***Beispiel 1*** | ***Beispiel 2*** | ***Beispiel 3*** | ***Vergleichs beispiel 1*** | ***Vergleichs beispiel 2*** | ***Vergleichs beispiel 3*** | ***Vergleichs beispiel 4*** |
|---|---|---|---|---|---|---|---|
| Foliendicke [µm] | 80 | 100 | 70 | 80 | 100 | 100 | 100 |
| Klebkraft Stahl [N/cm] | 2,8 | 3,0 | 3,0 | 2,8 | 2,9 | 2,8 | 1,8 |
| Reißkraft [N/cm] | 38 | 40 | 35 | 53 | 30 | 38 | 15 |
| Reißdehnung [%] | 350 | 450 | 400 | 390 | 290 | 550 | 150 |
| Kraft bei 10 % Dehnung [N/cm] | 8 | 9 | 7 | 12 | 7 | 8 | 6 |
| Kraft bei 50 % Dehnung [N/cm] | 13 | 15 | 12 | 19 | 11 | 13 | 12 |
| Wärmebeständigkeit 168h@140 °C | P | P | P | NP | NP | NP | NP |
| Kurzzeithitzebeständigkeit 30 min@170 °C | P | P | P | P | P | NP | NP |
| Handeinreißbarkeit | + | + | + | -- | ++ | + | +++ |
| FMVSS 302 | P | P | P | P | P | P | NP |
| ASTM D 568 | P | P | P | P | P | P | NP |
| Hydrolysebeständigkeit | P | P | P | NP | P | P | P |
| Durchschlagspannung [kV/100µm] | 5 | 6 | ND | 6 | ND | ND | 4 |
| Fogging-Wert | 97 | 91 | 94 | 95 | ND | ND | 30 |

| | | | | | | | |
|---|---|---|---|---|---|---|---|
| ND= not determined (nicht bestimmt), P = passed (erfüllt), NP = not passed (nicht erfüllt) * an mit Klingen geschnittenen Mustern # die Reißkraft liegt unter der Höchstkraft | | | | | | | |

### Zusammenfassung der Ergebnisse

Vergleichsbeispiel 1 zeigt die Hydrolyseanfälligkeit eines polyesterpolyolbasierten TPU (einschließlich der Alterung bei 140 °C).

Vergleichsbeispiel 2 zeigt die oxidative Empfindlichkeit eines polypropylengylcolbasierten TPU.

Vergleichsbeispiel 3 zeigt die niedrige Wärmeformbeständigkeit bei Hartblöcken mit geringerem Erweichungspunkt als die erfindungsgemäßen. Der Kristallitschmelzpunkt wurde mit 139 °C bestimmt, weshalb die Proben in den Alterungstesten auch geschmolzen sind.

## Patentansprüche

1. Thermisch hochbelastbares halogenfreies flammwidriges Wickelband mit einer Folie aus thermoplastischem Polyurethan, **dadurch gekennzeichnet, dass**
die Folie ein thermoplastisches Polyurethan aus einem hydroxylgruppenhaltigen Polymerisationsprodukt des Tetrahydrofurans, 4,4'-Diphenylmethandiisocyanat und Butandiol-(1,4) ist und mindestens ein halogenfreien Flammschutzmittel enthält.

2. Wickelband nach Anspruch 1, **dadurch gekennzeichnet, dass**
das Polyurethan aus
(A) 4,4'-Diphenylmethandiisocyanat und
(B) einem hydroxylgruppenhaltigen Polymerisationsprodukt des Tetrahydrofurans und
(C) Butandiol-(1,4) und
(E) mindestens einem halogenfreien nicht reaktiven oder einbaubarem Flammschutzmittel
vorzugsweise unter Verwendung von Stabilisatoren wie
(F) einem Antioxidant
und/oder
(G) einem Hydrolyseschutzmittel
gegebenenfalls unter Verwendung von
(D) einem Katalysator
und/oder
(H) weiteren Hilfs- und Zusatzstoffen
vorzugsweise im Prepolymerverfahren hergestellt ist.

3. Wickelband nach Anspruch 1 oder 2, **dadurch gekennzeichnet, dass**
das Wickelband farbig ist.

4. Wickelband nach zumindest einem der vorhergehenden Ansprüche 1 bis 3, **dadurch gekennzeichnet, dass**
die Klebemasse eine lösungsmittelfreie Haftklebemasse ist, welche durch Coextrusion, Schmelzbeschichtung oder Dispersionsbeschichtung aufgetragen wird, bevorzugt ein Haftschmelz- oder Dispersionshaftkleber auf Polyacrylat-Basis.

5. Wickelband nach zumindest einem der vorhergehenden Ansprüche, **dadurch gekennzeichnet, dass**
keine zusätzlichen Diisocyanate, langkettigen Polyole und/oder Kettenverlängerer enthalten sind.

6. Wickelband nach zumindest einem der vorhergehenden Ansprüche, **dadurch gekennzeichnet, dass**
das Molekulargewicht Mₙ des hydroxylgruppenhaltigen Polymerisationsproduktes des Tetrahydrofurans zwischen 450 bis 6000 Dalton und insbesondere zwischen 600 bis 1500 Dalton liegt.

7. Wickelband nach zumindest einem der vorhergehenden Ansprüche, **dadurch gekennzeichnet, dass**
die Menge an Hilfs- und Zusatzstoffen unter 20 Teilen auf 100 Teile Polyurethan liegt.

8. Wickelband nach zumindest einem der vorhergehenden Ansprüche, **dadurch gekennzeichnet, dass**
die Polyurethanfolie
vorzugsweise mindestens 0,5, besonders bevorzugt mindestens 1 phr mindestens eines Antioxidants
und/oder
eine Kombination mindestens eines primären und mindestens eines sekundären Antioxidants enthält
und/oder
vorzugsweise mindestens 0,5 besonders bevorzugt 2 phr eines Hydrolyseschutzmittels
und/oder
ein polymeres aromatisches Carbodiimid als Hydrolyseschutzmittel enthält.

9. Wickelband nach zumindest einem der vorhergehenden Ansprüche, **dadurch gekennzeichnet, dass**
die Bruchdehnung nach 312 Stunden Lagerung bei 140 °C mindestens 100 % beträgt und/oder
nach 30 min Lagerung bei 170 °C beim Wickeln mit mindestens 3 Windungen und 50 %-iger Überlappung um einen Dorn von 10 mm Durchmesser keine Beschädigungen zu beobachten sind.

10. Wickelband nach zumindest einem der vorhergehenden Ansprüche, **dadurch gekennzeichnet, dass**
die Shore D-Härte des Polyurethans mindestens 35 vorzugsweise mindestens 50 und/oder der Kristallitschmelzpunkt des Polyurethans mindestens 158 vorzugsweise mindestens 170 °C beträgt.

11. Wickelband nach zumindest einem der vorhergehenden Ansprüche, **dadurch gekennzeichnet, dass**
unter den in der FMVSS 302 oder ASTM D 568 genannten Prüfbedingungen selbstverlöschend und/oder
eine Durchschlagsspannung von mindestens 4 kV aufweist.

12. Wickelband nach zumindest einem der vorhergehenden Ansprüche, **dadurch gekennzeichnet, dass**
die Dicke der Folie 30 bis 180 µm, bevorzugt 50 bis 150 µm, ganz insbesondere 55 bis 100 µm beträgt,
die Kraft in Maschinenrichtung bei 10 %-Dehnung einen Wert von 2 bis 20 N/cm, besonders 4 bis 11 N/cm aufweist,
die Kraft bei 50 %-Dehnung einen Wert von 3 bis 25 N/cm, besonders 6 bis 17 N/cm aufweist und/oder
die Reißkraft größer als 10 N/cm und bevorzugt größer als 20 N/cm ist.

13. Wickelband nach zumindest einem der vorhergehenden Ansprüche, **dadurch gekennzeichnet, dass**
die Menge der Kleberschicht 10 bis 40 g/m², vorzugsweise 18 bis 28 g/m² beträgt,
die Klebkraft des Wickelbandes auf Stahl 1,5 bis 3 N/cm,
die Abrollkraft des Wickelbandes 1,2 bis 6,0 N/cm bei 300 mm/min Abrollgeschwindigkeit, bevorzugt 1,6 bis 4,0 N/cm, besonders bevorzugt 1,8 bis 2,5 N/cm und/oder
die Holding Power des Wickelbandes mehr als 150 min beträgt.

14. Wickelband nach zumindest einem der vorherigen Ansprüche, **dadurch gekennzeichnet, dass**
die Handeinreißbarkeit durch Additive in der Folie oder durch mechanische Schädigung der Seitenkante(n) der Folie erhöht wird.

15. Wickelband nach zumindest einem der vorhergehenden Ansprüche, **dadurch gekennzeichnet, dass**
das Flammschutzmittel ein Phophor- oder Phosphonsäureester, vorzugsweise ein Hydrocarbyl (dihydrocarbylphosphat) ist
und/oder
das phosphorhaltige Flammschutzmittel bei Hydrolyse weder Phenol noch Kresol freisetzt
und/oder
das Flammschutzmittel Melamincyanurat ist, welches vorzugsweise während des Herstellprozesses des Polyurethans zugegeben wird.

16. Verwendung eines Wickelbands nach zumindest einem der vorherigen Ansprüche zum Bündeln, Schützen, Kennzeichnen, Isolieren oder Abdichten von Lüftungsrohren, Drähten oder Kabeln oder zum Ummanteln von Kabelsätzen in Fahrzeugen oder Feldspulen für Bildröhren.

## Claims

1. Halogen-free, flame-resistant winding tape which can be subjected to high thermal load and comprises a film of thermoplastic polyurethane, **characterized in that** the film is a thermoplastic polyurethane composed of a hydroxyl-containing polymerization product of tetrahydrofuran, 4,4'-diphenylmethane diisocyanate, and butane-1,4-diol and contains at least one halogen-free flame retardant.

2. Winding tape according to Claim 1, **characterized in that** the polyurethane is prepared from
(A) 4,4'diphenylmethane diisocyanate and
(B) a hydroxyl-containing polymerization product of tetrahydrofuran and
(C) butane-1,4-diol and
(E) at least one halogen-free flame retardant which is not reactive or incorporable,
preferably with the use of stabilizers such as
(F) an antioxidant
and/or
(G) a hydrolysis stabilizer,
if desired with the use of
(D) a catalyst
and/or
(H) further auxiliaries and additives,
preferably by the prepolymer process.

3. Winding tape according to Claim 1 or 2, **characterized in that** the winding tape is colored.

4. Winding tape according to at least one of the preceding Claims 1 to 3, **characterized in that** the adhesive is a solvent-free, pressure-sensitive adhesive which is applied by coextrusion, melt coating or dispersion coating, preferably a polyacrylate-based, pressure-sensitive, hotmelt or dispersion-based adhesive.

5. Winding tape according to at least one of the preceding claims, **characterized in that** there are no additional diisocyanates, long-chain polyols and/or chain extenders present.

6. Winding tape according to at least one of the preceding claims, **characterized in that** the molecular weight, Mₙ, of the hydroxyl-containing polymerization product of tetrahydrofuran is between 450 to 6000 daltons and more particularly between 600 to 1500 daltons.

7. Winding tape according to at least one of the preceding claims, **characterized in that** the amount of auxiliaries and additives is below 20 parts per 100 parts of polyurethane.

8. Winding tape according to at least one of the preceding claims, **characterized in that** the polyurethane film comprises
preferably at least 0.5, more preferably at least 1 phr of at least one antioxidant
and/or
a combination of at least one primary and at least one secondary antioxidant
and/or
preferably at least 0.5, more preferably 2 phr of a hydrolysis stabilizer
and/or
a polymeric aromatic carbodiimide as hydrolysis stabilizer.

9. Winding tape according to at least one of the preceding claims, **characterized in that** the breaking extension after 312 hours' storage at 140°C is at least 100%
and/or
after 30 minutes' storage at 170°C, on winding with at least 3 turns and 50% overlap around a mandrel 10 mm in diameter, there are no observable instances of damage.

10. Winding tape according to at least one of the preceding claims, **characterized in that** the Shore D hardness of the polyurethane is at least 35, preferably at least 50, and/or the crystallite melting point of the polyurethane is at least 158°C, preferably at least 170°C.

11. Winding tape according to at least one of the preceding claims, **characterized in that** it is self-extinguishing under the test conditions specified in FMVSS 302 or ASTM D 568 and/or
has a breakdown voltage of at least 4 kV.

12. Winding tape according to at least one of the preceding claims, **characterized in that**
the thickness of the film is 30 to 180 µm, preferably 50 to 150 µm, especially 55 to 100 µm,
the force in machine direction at 10% extension has a value of 2 to 20 N/cm, in particular 4 to 11 N/cm,
the force at 50% extension has a value of 3 to 25 N/cm, in particular 6 to 17 N/cm,
and/or
the tearing force is greater than 10 N/cm and preferably greater than 20 N/cm.

13. Winding tape according to at least one of the preceding claims, **characterized in that**
the amount of the layer of adhesive is 10 to 40 g/m², preferably 18 to 28 g/m²,
the bond strength of the winding tape to steel is 1.5 to 3 N/cm,
the unwind force of the winding tape is 1.2 to 6.0 N/cm at an unwind speed of 300 mm/min, preferably 1.6 to 4.0 N/cm, more preferably 1.8 to 2.5 N/cm, and/or
the holding power of the winding tape is more than 150 min.

14. Winding tape according to at least one of the preceding claims, **characterized in that** the hand tearability is increased by additives in the film or by mechanical detriment of the side edge(s) of the film.

15. Winding tape according to at least one of the preceding claims, **characterized in that**
the flame retardant is a phosphoric or phosphonic ester, preferably a hydrocarbyl
(dihydrocarbyl phosphate)
and/or
the phosphorus-containing flame retardant releases neither phenol nor cresol on hydrolysis
and/or
the flame retardant is melamine cyanurate, which is added preferably during the process of preparing the polyurethane.

16. Use of a winding tape according to at least one of the preceding claims for bundling, protecting, marking, insulating or sealing ventilation pipes, wires or cables or for wrapping cable harnesses in vehicles or field coils for picture tubes.

## Revendications

1. Ruban à enrouler ininflammable, sans halogène, à haute résistance thermique, comportant un film à base de polyuréthanne thermoplastique, **caractérisé en ce que** le film est un polyuréthanne thermoplastique à base d'un produit de polymérisation, contenant des groupes hydroxy, du tétrahydrofuranne, de 4,4'-diphénylméthane-diisocyanate et de butanediol-(1,4) et contient au moins un agent ignifuge exempt d'halogène.

2. Ruban à enrouler selon la revendication 1,
**caractérisé en ce que** le polyuréthanne à base
(A) de 4,4'-diphénylméthane-diisocyanate et
(B) d'un produit de polymérisation, contenant des groupes hydroxy, du tétrahydrofuranne et
(C) de butanediol-(1,4) et
(E) d'au moins un agent ignifuge exempt d'halogène, non réactif ni incorporable
de préférence avec utilisation de stabilisants tels que
(F) un antioxydant
et/ou
(G) un agent protecteur contre l'hydrolyse
éventuellement avec utilisation
(D) d'un catalyseur
et/ou
(H) d'autres additifs et adjuvants
est de préférence préparé dans le procédé faisant appel à un prépolymère.

3. Ruban à enrouler selon la revendication 1 ou 2, **caractérisé en ce que** le ruban à enrouler est coloré.

4. Ruban à enrouler selon au moins l'une des revendications précédentes 1 à 3, **caractérisé en ce que** la matière adhésive est une matière autoadhésive sans solvant, qui est appliquée par coextrusion, enduction en masse fondue ou enduction en dispersion, de préférence un autoadhésif fusible ou en dispersion à base de polyacrylate.

5. Ruban à enrouler selon au moins l'une des revendications précédentes, **caractérisé en ce que** des diisocyanates supplémentaires, des polyols à longue chaîne et/ou des prolongateurs de chaîne ne sont pas contenus.

6. Ruban à enrouler selon au moins l'une des revendications précédentes, **caractérisé en ce que** la masse moléculaire Mₙ du produit de polymérisation, contenant des groupes hydroxy, du tétrahydrofuranne est comprise entre 450 et 6 000 daltons et en particulier entre 600 et 1 500 daltons.

7. Ruban à enrouler selon au moins l'une des revendications précédentes, **caractérisé en ce que** la quantité d'additifs et d'adjuvants est inférieure à 20 parties pour 100 parties de polyuréthanne.

8. Ruban à enrouler selon au moins l'une des revendications précédentes, **caractérisé en ce que** le film de polyuréthanne contient
de préférence au moins 0,5, de façon particulièrement préférée au moins 1 phr (partie pour 100 parties de résine) d'au moins un antioxydant
et/ou
une association d'au moins un antioxydant primaire et d'au moins un antioxydant secondaire
et/ou
de préférence au moins 0,5, de façon particulièrement préférée 2 phr d'un agent protecteur contre l'hydrolyse
et/ou
un carbodiimide aromatique polymère en tant qu'agent protecteur contre l'hydrolyse.

9. Ruban à enrouler selon au moins l'une des revendications précédentes, **caractérisé en ce que**
l'allongement à la rupture après conservation pendant 312 heures à 140 °C est d'au moins 100 %
et/ou
après conservation pendant 30 minutes à 170 °C on ne peut constater aucune détérioration lors de l'enroulement avec au moins 3 tours et chevauchement à 50 % sur un mandrin de 10 mm de diamètre.

10. Ruban à enrouler selon au moins l'une des revendications précédentes, **caractérisé en ce que** la dureté Shore D du polyuréthanne est d'au moins 35, de préférence d'au moins 50 et/ou le point de fusion de cristallite du polyuréthanne est d'au moins 158, de préférence d'au moins 170 °C.

11. Ruban à enrouler selon au moins l'une des revendications précédentes, **caractérisé en ce que** dans les conditions d'essai indiquées dans la norme FMVSS 302 ou ASTM D 568, il s'éteint de lui-même et/ou présente une tension de percement disruptif d'au moins 4 kV.

12. Ruban à enrouler selon au moins l'une des revendications précédentes, **caractérisé en ce que**
l'épaisseur du film va de 30 à 180 µm, de préférence de 50 à 150 µm, tout particulièrement de 55 à 100 µm,
la force dans le sens de la machine à un allongement de 10 % présente une valeur de 2 à 20 N/cm, en particulier de 4 à 11 N/cm,
la force à un allongement de 50 % présente une valeur de 3 à 25 N/cm, en particulier de 6 à 17 N/cm et/ou
la résistance à la traction est supérieure à 10 N/cm et de préférence supérieure à 20 N/cm.

13. Ruban à enrouler selon au moins l'une des revendications précédentes, **caractérisé en ce que**
la quantité de la couche d'adhésif va de 10 à 40 g/m², de préférence de 18 à 28 g/m²,
la force de collage du ruban à enrouler sur de l'acier vaut de 1,5 à 3 N/cm,
la force de déroulement du ruban à enrouler vaut de 1,2 à 6,0 N/cm à une vitesse de déroulement de 300 mm/min, de préférence de 1,6 à 4,0 N/cm, de façon particulièrement préférée de 1,8 à 2,5 N/cm et/ou le pouvoir de maintien (*holding power*) du ruban à enrouler est de plus de 150 min.

14. Ruban à enrouler selon au moins l'une des revendications précédentes, **caractérisé en ce que** l'aptitude au déchirement à la main est accrue par des additifs dans le film ou par un endommagement mécanique du/des bord(s) latéral(aux) du film.

15. Ruban à enrouler selon au moins l'une des revendications précédentes, **caractérisé en ce que** l'agent ignifuge est un ester d'acide phosphorique ou phosphonique, de préférence un hydrocarbyle (phosphate de dihydrocarbyle)
et/ou
l'agent ignifuge phosphoré ne libère pas de phénol ni de crésol à l'hydrolyse
et/ou
l'agent ignifuge est le cyanurate de mélamine, qui est ajouté de préférence pendant le processus de préparation du polyuréthanne.

16. Utilisation d'un ruban à enrouler selon au moins l'une des revendications précédentes pour l'empaquetage, la protection, le marquage, l'isolation ou l'étanchéification de conduits d'aération, de fils ou de câbles ou pour le gainage de faisceaux de câbles dans des véhicules ou des bobines excitatrices pour tubes cathodiques.
